(19) Europäisches Patentamt / European Patent Office / Office européen des brevets

(11) **EP 3 041 093 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **15198356.6**

(22) Anmeldetag: **08.12.2015**

(51) Int Cl.:
*H01S 3/08* (2006.01)     *H01S 3/106* (2006.01)
*H01S 3/137* (2006.01)     *H01S 3/107* (2006.01)
*H01S 3/109* (2006.01)     *H01S 3/067* (2006.01)
*H01S 3/081* (2006.01)     *H01S 3/083* (2006.01)

(54) **OPTISCHE RESONATORANORDNUNG UND VERFAHREN ZUM EINSTELLEN EINER UMLAUFZEIT IN EINEM RESONATOR**

OPTICAL RESONATOR DEVICE, AND METHOD FOR ADJUSTING A ROUND TRIP TIME IN A RESONATOR

SYSTÈME DE RÉSONATEUR OPTIQUE ET PROCÉDÉ DE RÉGLAGE D'UN TEMPS DE CYCLE DANS UN RÉSONATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014 DE 102014226973**

(43) Veröffentlichungstag der Anmeldung:
**06.07.2016 Patentblatt 2016/27**

(73) Patentinhaber: **Menlo Systems GmbH**
**82152 Martinsried (DE)**

(72) Erfinder:
• **HOLZWARTH, Ronald**
**82194 Gröbenzell (DE)**
• **HÄNSEL, Wolfgang**
**81369 München (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 2 846 421     WO-A1-2015/139829**
**US-A- 5 381 427     US-A- 5 590 148**
**US-B2- 8 908 189**

• **FRENCH P M W ET AL: "Tunable group velocity dispersion interferometer for intracavity and extracavity applications", OPTICS COMMUNICATIONS, NORTH-HOLLAND PUBLISHING CO. AMSTERDAM, NL, Bd. 57, Nr. 4, 15. März 1986 (1986-03-15), Seiten 263-268, XP024476483, ISSN: 0030-4018, DOI: 10.1016/0030-4018(86)90095-7 [gefunden am 1986-03-15]**

**Beschreibung**

Die Erfindung bezieht sich auf eine optische Resonatoranordnung mit einem Resonator sowie auf ein Verfahren, mit dem die Lage der Moden eines solchen Resonators oder eine Gruppenumlaufzeit (und /oder Phasenumlaufzeit) von in dem Resonator umlaufenden optischen Pulsen eingestellt wird.

Das Wesen eines Resonators besteht darin, für bestimmte Frequenzen eine resonante Verstärkung aufzuweisen. Innerhalb eines gewissen spektralen Bereiches lässt sich die Lage dieser Resonanzen durch die absolute Position einer Spektrallinie sowie durch den Abstand benachbarter Spektrallinien charakterisieren. Die Steuerung der Lage dieser Resonanzen ist insbesondere im Gebiet der kurzen bzw. ultrakurzen Pulse sowie in der Frequenzkammtechnologie von Bedeutung.

Insbesondere für die Verwendung solcher Resonatoren im Bereich ultrakurzer Laserpulse wird die Lage der Resonanzen häufig durch zwei Größen charakterisiert, den bereits genannten Abstand der Resonanzlinien, welcher der Pulswiederholrate von in einem solchen Resonator umlaufenden Pulsen entspricht, und der sogenannten Träger-Einhüllenden-Frequenz, welche den Abstand der kleinsten Resonanzlinie von Null angibt, wenn man die Resonanzen mit konstantem Abstand in Richtung kleiner Frequenzen fortsetzt. Die Bedeutung der Träger-Einhüllenden-Frequenz ergibt sich aus der Anwendung eines solchen Resonators zur Erzeugung und/oder Filterung regelmäßiger Laserpulse bzw. eines damit verbundenen Frequenzkamms.

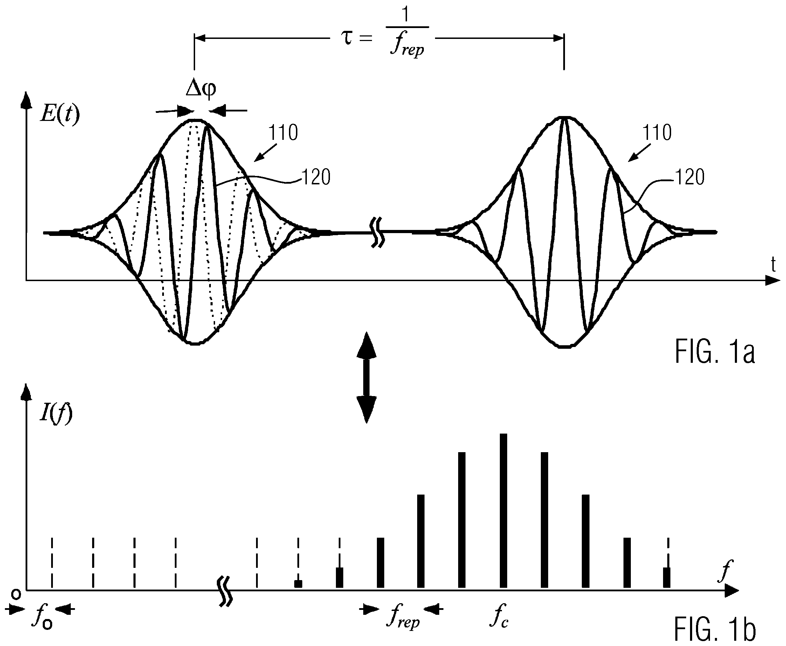

Figur 1a zeigt regelmäßige Laserpulse in einer Auftragung des elektrischen Feldes gegen die Zeit. Dabei ist sowohl die Einhüllende des Laserpulses 110 ("envelope") als auch die Trägerwelle 120 ("carrier") des Laserpulses 110 gezeigt. Die Trägerwelle 120 ist durch eine sinusartige Schwingung im Bereich optischer Frequenzen darstellbar.

Figur 1b zeigt den zu den Laserpulsen 110 aus Figur 1a zugehörigen Frequenzkamm. Dieser Frequenzkamm weist eine Vielzahl von Lasermoden $f_m$ mit einem Abstand $f_{rep}$ voneinander auf. $f_{rep}$ ist dabei der Abstand benachbarter Moden des Frequenzkamms zueinander. Die Moden $f_m$ des Frequenzkamms lassen sich, wie erwähnt, durch folgende Formel beschreiben:

$$f_m = m \times f_{rep} + f_0. \qquad (1)$$

Dabei ist m eine natürliche Zahl. Selbstverständlich erstrecken sich die Moden eines realen Frequenzkamms über eine endliche Breite im Frequenzraum. Der Parameter $f_0$ des Frequenzkamms wird im Folgenden als (Carrier-Envelope-)Offset-Frequenz bzw. Träger-Einhüllenden-Offsetfrequenz des Frequenzkamms bezeichnet. Das Vorhandensein dieser Offset-Frequenz $f_0$ führt dazu, dass die Frequenzen der Lasermoden $f_m$ nicht

notwendigerweise Vielfache voneinander sind. Um die Moden $f_m$ eines Resonators, insbesondere die Moden eines Frequenzkammgenerators, einzustellen oder anderweitig zu kontrollieren, ist es vorteilhaft, wenn der Abstand benachbarter Moden zueinander, $f_{rep}$, und/oder die Offset-Frequenz $f_0$ einstellbar ist.

In der DE 199 11 103 A1, der EP 1 161 782 B1 und der DE 100 44 404 C2 sind einige Verfahren beschrieben, wie die Freiheitsgrade des Frequenzkamms, also zum Beispiel die Offset-Frequenz $f_0$ und der Modenabstand $f_{rep}$, auf feste Werte fixiert bzw. eingestellt werden können. Eine verbreitete Methode besteht darin, die Offsetfrequenz $f_0$ als einen Parameter über eine geeignete Vorrichtung zu messen, beispielsweise über ein f-2f-Interferometer, und als zweiten Parameter beispielsweise den Modenabstand.

Zu diesem Zweck ist je ein Stabilisator oder Regelkreis vorgesehen. Ein erster Stabilisator betrifft den Modenabstand. Als Messwert für diesen Stabilisator kann die (ggf. in besser erfassbare Bereiche geteilte oder multiplizierte) Pulswiederholfrequenz dienen, die - wie erläutert - dem Modenabstand entspricht. Eine Auswerte- und Vergleichseinheit vergleicht den gemessenen Wert mit einem vorgegebenen Referenzwert für die Pulswiederholfrequenz. Um den Modenabstand zu verändern oder um ihn bei festgestellter Abweichung auf den vorgegebenen Referenzwert einzustellen, steuert der Stabilisator ein Stellglied an, das die optische Weglänge des Oszillators und damit die Pulswiederholfrequenz ändert. Beispielsweise kann das Stellglied ein Linearantrieb oder ein elektrooptisches Element oder ein Piezoaktuator für einen Resonatorendspiegel des Oszillators sein.

Ein zweiter Stabilisator regelt die Offset-Frequenz $f_0$ auf einen bestimmten Wert. Zu diesem Zweck wird eine bestimmte Mode $f_m$ des Frequenzkamms auf einem Detektor (z.B. einer Photodiode oder einem Photomultiplier) entweder mit einer externen, exakt bekannten Referenzfrequenz (z.B. von einem Dauerstrich-Laser) oder mit einer frequenzverdoppelten Mode aus dem gleichen Frequenzkamm überlagert. Die Überlagerung erzeugt auf dem Detektor eine Schwebungsfrequenz im Radiofrequenzbereich. Eine Auswerte- und Vergleichseinheit vergleicht die Schwebungsfrequenz mit einer vorgegebenen, ggf. variabel einstellbaren Referenzfrequenz. Stellt sich dabei eine Abweichung heraus, steuert der zweite Stabilisator ein Stellglied, das den Unterschied zwischen Phasen- und Gruppenlaufzeit im Oszillator verändert. Geschehen kann dies beispielsweise, indem ein Resonatorendspiegel in einem von den Moden räumlich getrennt durchlaufenen Resonatorzweig leicht verkippt wird, um die optische Weglänge des Oszillators frequenzabhängig zu ändern. Eine weitere Stellmöglichkeit, welche je nach Implementierung sowohl schnelle Antwortzeiten (unterhalb einer Mikrosekunde) als auch hohe Dynamik erlaubt, verwendet die geometrische Phase in der Entwicklung von Polarisationszuständen. Sie ermöglicht insbesondere das Einstellen der Träger-Einhüllenden-Offsetfrequenz ohne Übersprechen auf die Pulswiederholrate und/oder die Umlaufverluste des Resonators. Alternativ können die Oszillatorverluste verändert werden, z.B. durch einen Intensitätsmodulator, oder indem die Pumpleistung für den gegebenenfalls im Oszillator vorhandenen Verstärker verändert wird, es kann ein dispersives Element wie ein Prismenpaar oder eine transparente, kippbare Platte in den Strahlengang des Oszillators eingeführt und in seiner Lage verändert werden, oder eine lichtführende Komponente, insbesondere ein "gechirptes" Faser-Bragg-Gitter, kann durch Dehnung oder Temperatur verändert werden.

Mit den in der DE 199 11 103 A1, der EP 1 161 782 B1 oder der DE 100 44 404 C2 beschriebenen Mitteln wird insgesamt ein vollständig stabilisierter Frequenzkamm erzeugt, dessen einzelne Moden bei exakt bekannten Frequenzen liegen und zueinander kohärent sind. Hinsichtlich der detaillierten Beschreibung dieser Mittel wird auf die drei genannten Dokumente verwiesen.

Die oben beschriebene Technik der Stabilisierung eines Resonators oder Frequenzkamm-Lasers ist nur eine von vielen möglichen. Je nach Art der Anwendung und der technischen Möglichkeiten sind unterschiedliche Arten der Stabilisierung sinnvoll. Insbesondere die Erzeugung der Fehlersignale kann auf verschiedene Weisen geschehen. Neben der Messung der Offset-Frequenz (beispielsweise mit Hilfe eines f-zu-2f-Interferometers) und der Repetitionsrate ist die Lagebestimmung einzelner Resonanzlinien, beispielsweise mit Hilfe eines Referenzlasers, vorteilhaft. Beispielsweise kann die Lage der Trägerfrequenz eines Pulslasers gemeinsam mit der Offset-Frequenz zur Stabilisierung genutzt werden. Hier ist insbesondere von Vorteil, dass sich, anders als bei der Stabilisierung über die Repetitionsrate, das Rauschen der Referenz nicht hochmultipliziert auf die optischen Resonanzlinien überträgt.

Für eine vollständige Stabilisierung sind auf jeden Fall zwei linear unabhängige Fehlersignale für die Lage der Resonanzlinien erforderlich. Für die Regelung ist es von Vorteil, wenn die Stellelemente so gewählt werden können, dass sie jeweils auf eines der beiden Fehlersignale einwirken, während sie das andere möglichst unverändert lassen. Zwar ist es möglich, die Fehlersignale zu orthogonalisieren, allerdings kann bei unterschiedlicher Qualität der Fehlersignale die Gesamtqualität der Stabilisierung leiden, insbesondere dann, wenn die verwendeten Stellelemente unterschiedliche Stellgeschwindigkeiten aufweisen. Eine physikalische Entkopplung der Freiheitsgrade ist daher vorteilhaft.

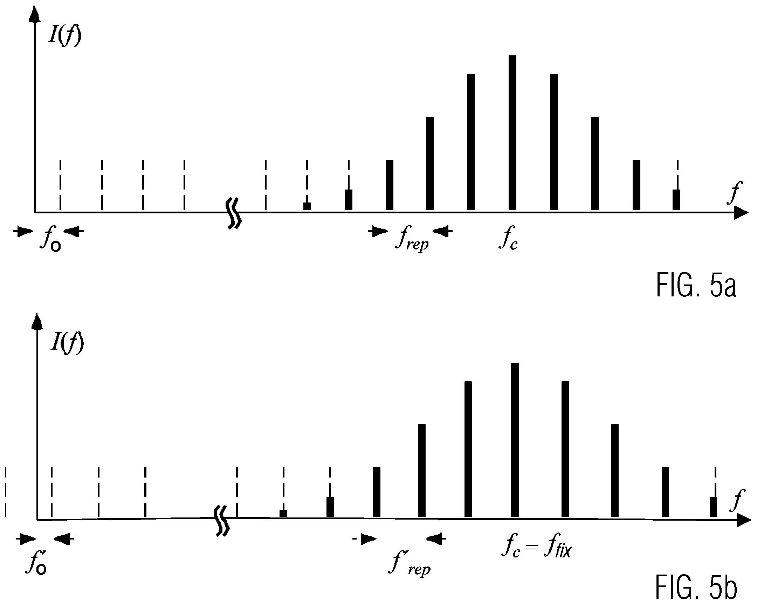

Wird beispielsweise ein Frequenzkamm-Laser auf seine Offset-Frequenz (welche nahe bei 0 liegt) und auf eine optische Mode, z.B. nahe an der Trägerfrequenz $f_C$ stabilisiert, so besteht das erste Fehlersignal aus der Lage einer Resonator-Mode in der Nähe der Trägerfrequenz $f_C$ und das zweite aus der Offset-Frequenz $f_0$. Der ideale erste Steller streckt die Lage der Resonanzfrequenzen um 0, so dass er die Offset-Frequenz nicht (wesentlich) beeinflusst, während er die Trägerfrequenz verändert. Der ideale zweite Steller dehnt die Resonanzmoden um die Trägerfrequenz $f_C$ und verändert so die Offset-Frequenz, ohne die Trägerfrequenz zu verschieben. Die Wirkung eines solchen Stellelementes zeigt Figur 5. In Figur 5a ist der unveränderte Frequenzkamm abgebildet, während Figur 5b den gleichen Frequenzkamm nach einer Dehnung um die Trägerfrequenz $f_C$ zeigt.

Stellelemente, welche die Resonanzlinien um (ungefähr) die Nullfrequenz dehnen bzw. stauchen, d.h. welche die Pulswiederholrate ohne wesentliches Übersprechen auf die Offset-Frequenz einstellen, sind vor allem bewegliche Spiegeln und elektrooptische Phasenmodulatoren, welche in Summe eine Einstellung mit großem Hub und hoher Einstellgeschwindigkeit erlauben. Die Streckung bzw. Stauchung der Resonanzlinien um einen von null verschiedenen Fixpunkt ist schwieriger zu erreichen. Zwar gibt es unter den oben aufgezählten Stellelementen für die Offset-Frequenz einige, die dies erreichen, die verschiedenen Implementierungen weisen aber unterschiedliche Einschränkungen auf. Nachteilig am Stand der Technik ist beispielsweise, dass die Einstellgeschwindigkeit der existierenden Stellelemente begrenzt ist, da sie überwiegend mechanische oder thermische Effekte verwenden. Für die schnelle Einstellung wird bisher im Wesentlichen die Modulation der Intensität im Resonator verwendet, welche über den Kerr-Effekt auf die Offset-Frequenz zurückwirkt. Die Intensität wird dabei über die Güte des Resonators oder über die Pumpleistung variiert. Dabei ist nachteilig, dass hier eine an sich unerwünschte Intensitätsmodulation auftritt. Ferner ist unvorteilhaft, dass diese Intensitätsmodulation im Resonator mit thermischen Effekten verkoppelt sein kann, welche eine zusätzliche langsame Systemantwort hervorrufen und so die Regelung erschweren oder unmöglich machen kann. Insbesondere eignet sich die Intensitätsmodulation im Wesentlichen für Laserresonatoren und weniger für Filter- oder Überhöhungsresonatoren.

Weiter ist nachteilig, dass sich die Lage des Fixpunktes häufig nicht gezielt steuern lässt, sondern implizit von den verwendeten Komponenten abhängt. Zuletzt ist ungünstig, dass eine Reihe von Stellelementen nur einen begrenzten Hub beziehungsweise eine begrenzte Empfindlichkeit auf ein Stellsignal aufweist.

Die US 5,381,427 beschreibt keinen gepulsten Laser sondern einen Single-Mode-Laser, d. h. einen Dauerstrichlaser.

Die US 5,590,148 beshreibt eine Möglichkeit zum Aufteilen extrem intensiver Laserstrahlen mit oder ohne einen optischen Resonator.

Der Artikel "Tunable Group Velocity Dispersion Interferometer for Intra-Cavity and Extra-Cavity Applications", P. M. W. French, G. F. Chen und W. Sibbett, Optics Communications, Vol. 57, No. 4, Seiten 263 bis 268, beschreibt den Einsatz eines Gires-Tournois-Interferometers in einem Resonator zum Einstellen der Gruppengeschwindigkeits-Dispersion (GVD) mit dem Ziel möglichst kurzer Pulsdauern.

Die nachveröffentlichte EP 2 841 421 A1 beschreibt den Aufbau eines Lasers mit einem nichtlinearen optischen Loop-Spiegel, während die ebenfalls nachveröffentlichte WO 2015/139829 A1 ein Verfahren beschreibt, mit dem bei konstant gehaltener Repetitionsrate die sogenannte Offset-Frequenz eines Frequenzkamms verändert werden kann.

Die Aufgabe der Erfindung ist es, Möglichkeiten zu einer Veränderung oder Regelung der Repetitionsrate, der Gruppenumlaufzeit von in einem Resonator umlaufenden Pulsen und von der Träger-Offsetfrequenz von Resonatorstrahlung zu implementieren, die sich leichter handhaben lassen oder die eine schnellere Einstellung ermöglichen.

Diese Aufgabe wird erfindungsgemäß gelöst durch eine optische Resonatoranordnung mit den Merkmalen des Anspruchs 1 oder durch ein Verfahren mit den Merkmalen des Anspruchs 11. Vorteilhafte Weiterbildungen der Erfindung sind in den Unteransprüchen angegeben.

Bei der Erfindung ist in einem Resonator ein Interferometer mit zwei oder mehr Interferometerarmen vorgesehen. Dieses Interferometer teilt die im Resonator umlaufende Strahlung, d.h. im Resonator umlaufende Pulse, in einen ersten Anteil für einen der Interferometerarme sowie in einen zweiten Anteil für einen zweiten Interferometerarm auf (zu denen weitere Anteile hinzukommen können, wenn mehr als zwei Interferometerarme vorhanden sind). Erfindungsgemäß unterscheiden sich die optischen Weglängen entlang der beiden Interferometerarme voneinander. Dies bedeutet, dass sich die Gruppen- und /oder Phasenumlaufzeiten der beiden Strahlanteile voneinander unterscheiden, wenn sie nach Durchlaufen des Interferometers wieder zusammengeführt werden, d.h. miteinander interferieren. In einer beispielhaften Ausführungsform der Erfindung sind die beiden Interferometerarme so konstruiert, dass Licht einer bestimmten Zielfrequenz $f_Z$ (und einer zugehörigen Zielwellenlänge $\lambda_Z$) mit einer Phase von n x 2 x $\pi$ interferiert, sich also konstruktiv überlagert.

Erfindungsgemäß ist nun ein Aufteilungsverhältnis, mit dem das Interferometer im Resonator umlaufende Strahlung auf den ersten und zweiten Interferometerarm aufteilt, variabel einstellbar. Wird das Aufteilungsverhältnis des Interferometers verändert, ohne dabei gleichzeitig die optischen Weglängen entlang der beiden Interferometerarme zu verändern, so ändert sich für die zur Frequenz $f_Z$ gehörenden Welle die interferierende Phase nicht. Es ändert sich hingegen das Gruppenzentrum eines mit der Trägerfrequenz $f_C = f_Z$ umlaufenden Pulses, d.h. die nach Durchlaufen des Interferometers resultierende Strahlung hat bei einer Veränderung des Aufteilungsverhältnisses insgesamt eine Veränderung der Gruppenumlaufzeit im Resonator erfahren. Da die Änderung der Gruppenumlaufzeit eine Änderung der Repetitionsrate (Synonym: Pulswiederholrate) des Resonators bewirkt, führt das Ändern des Aufteilungsverhältnisses gleichzeitig zu einer Veränderung dieser Repetitionsrate.

Im Frequenzraum (Figur 1b) bedeutet dies, dass sich der Kamm der Frequenzen $f_m$ ziehharmonikaartig um den Fixpunkt $f_{fix} = f_Z$ streckt, d.h. dass die Abstände zwischen einander benachbarten Moden gleichmäßig um einen einheitlichen Faktor größer oder kleiner werden. Dies bedeutet, dass sich gleichzeitig selbstverständlich auch die Träger-Einhüllenden-Offset-Frequenz $f_0$ ändert, d.h. die sogenannte Offsetfrequenz des in Figur 1b gezeigten Frequenzkamms. Mathematisch lässt sich die Gruppenverzögerung bei Interferenz aus k unterschiedlichen Pfaden eines Interferometers aus den Einzelamplituden $A_i$ errechnen, welche das elektrische Feld entlang der Pfade i = 1 ..., k besitzt.

Die Erfindung ist vorteilhaft anwendbar insbesondere auf dem Gebiet der optischen Resonatoranordnungen, insbesondere von Laser-Resonatoranordnungen. Besonders vorteilhaft lässt sich die Erfindung nutzen zum Erzeugen oder zum Feineinstellen von Frequenzkämmen sowie zum Einstellen der Eigenschaften (beispielsweise der Repetitionsrate) von Kurzpuls- oder Ultrakurzpuls-Resonatoren. Die betreffenden Laserpulse können dabei Pulsdauern im Bereich von Pikosekunden oder Femtosekunden aufweisen.

Allerdings ist die Erfindung ebenso gut anwendbar für größere oder noch kleinere Pulsdauern.

Die Erfindung ermöglicht es, die Resonanzlinien eines Resonators in gezielter Weise um einen Fixpunkt zu strecken oder zu stauchen. Die Lage des Fixpunktes ist in gewissem Rahmen frei wählbar und liegt bei einer bevorzugten Implementierung in der Nähe der Trägerfrequenz der zu beeinflussenden Laserstrahlung. Die Erfindung lässt dabei sowohl langsame als auch besonders schnelle Einstellzeiten zu, insbesondere Einstellzeiten von weniger als einer Mikrosekunde. Es ist eine Besonderheit, dass diese neue Methode einen deutlich größeren Hub ermöglicht als vergleichbare schnelle Repetitionsratensteller, so dass unter geeigneten Umständen auf zusätzliche langsamere Elemente mit größerem Hub verzichtet werden kann. Die Erfindung kann auch klassische Repetitionsratensteller, welche die Resonanzlinien um den Nullpunkt strecken bzw. stauchen, ersetzen bzw. ergänzen, wenn die gleichzeitige Beeinflussung der Träger-Einhüllenden-Offsetfrequenz unproblematisch ist.

Ein besonderer Vorteil der Erfindung besteht also darin, dass die Resonanzlinien um einen gezielt wählbaren Fixpunkt gedehnt bzw. gestaucht werden können, insbesondere um die Trägerfrequenz der optischen Strahlung. Dies ist speziell von Nutzen bei der Stabilisierung eines Frequenzkamms auf optische Referenzfrequenzen. In einer speziellen Ausführung ermöglicht die Erfindung Einstellungen mit besonders hoher Stellgeschwindigkeit, insbesondere innerhalb weniger als einer Mikrosekunde. Zusätzlich kann der Hub bzw. die Empfindlichkeit der schnellen Variante erheblich größer sein als bei bisherigen schnellen Repetitionsratenstellern. Eine besonders robuste Implementierung kann mit Hilfe von Waveguides erfolgen. Aufgrund der großen erreichbaren Signalempfindlichkeit ist jedoch auch eine Implementierung mit Freistrahlelementen vorteilhaft, insbesondere, weil so die Einfügedämpfung gering gehalten werden kann, typisch sind Verluste von weniger als 10%, 5% bzw. 1%. Ein weiterer Vorteil der Erfindung besteht darin, dass die Methode ohne bewegliche Teile implementiert werden kann und so zu sehr kompakten und robusten Aufbauten führt. Es eignet sich daher insbesondere auch für den Einsatz in Freistrahllasern (z.B. Festkörper-, Gas- oder Farbstofflaser) oder allgemein in Lasern, in welchen der Laser-Resonator eine vergleichsweise hohe Güte aufweist.

Vorzugsweise weist die Resonatoranordnung ein Stellglied zum Einstellen des Aufteilungsverhältnisses der Strahlung auf die beiden Interferometerarme auf. Mittels des Stellglieds ist eine automatische und damit noch schnellere Einstellung des Aufteilungsverhältnisses möglich. Das Stellglied hat idealerweise eine Regelbandbreite von mindestens 10 kHz, mindestens 100 kHz oder mindestens 1000 kHz und erlaubt somit eine sehr schnelle Änderung des Aufteilungsverhältnisses der Strahlung auf die beiden Interferometerarme, somit also ein sehr schnelles Einstellen einer Umlaufzeit der Pulse im Resonator.

Bereits erwähnt wurde die Möglichkeit, dass das Interferometer nicht nur zwei, sondern auch mehr als zwei Interferometerarme aufweisen kann. Dies kann unter anderem dadurch geschehen, dass mehrere Zweistrahl-Interferometer ineinander verschachtelt verwendet werden. Variabel einstellbar ist dann vorzugsweise ein Aufteilungsverhältnis, mit dem eines der Interferometer die im Resonator umlaufende Strahlung auf dessen zwei Interferometerarme aufteilt. Alternativ kann gleichzeitig auch ein Aufteilungsverhältnis auf mehr als zwei Interferometerarme vorgesehen werden.

Zweckmäßig weist die Resonatoranordnung eine Messvorrichtung auf, die zum Messen der Lage der Resonanzen konfiguriert ist, insbesondere zur Bestimmung der Repetitionsrate und/oder der Träger-Einhüllenden-Offsetfrequenz eines vom Resonators erzeugten bzw. aufgenommenen Frequenzkamms. Das Signal der Messvorrichtung kann einer Steuerung oder Auswerteeinheit zugeleitet werden und nach geeigneter Auswertung, beispielsweise dem Vergleich mit einem Zielwert, genutzt werden zum Einstellen einer gewünschten Repetitionsrate.

Denkbar ist es, dass das Interferometer wenigstens ein doppelbrechendes optisches Element aufweist oder sogar insgesamt durch ein solches doppelbrechendes optisches Element realisiert ist. Die unterschiedlichen Interferometerarme werden dann entlang der beiden Polarisationsrichtungen realisiert. Dies bietet den Vorteil, dass die beiden optischen Interferometerarme geometrisch identisch sein können, d.h. dass sich eine sehr kompakte und stabile Resonatoranordnung ergibt. Außerdem lässt sich solch ein doppelbrechendes optisches Element sehr schnell zu einer Veränderung des Aufteilungsverhältnisses ansteuern. Anstelle der Doppelbrechung können beliebige andere Effekte treten, welche eine polarisationsabhängige Laufzeit- und/oder Phasenverzögerung hervorrufen. Beispielsweise ist dies die Phasenverzögerung bei Reflektion an nicht-sphärisch gekrümmten Spiegeln oder der Phasenversatz zwischen s- und p-Polarisation bei Reflektion unter nichtsenkrechtem Einfall. Die Größe der Phasenverschiebung kann gegebenenfalls einstellbar sein, beispielsweise durch den Reflektionswinkel.

Das wenigstens eine doppelbrechende Element kann insbesondere eine ganzzahlige Wellenplatte für eine resonante Trägerwelle der Strahlung im Resonator sein, d.h. eine n x $\lambda$-Platte, mit ganzzahligem n $\geq$ 1. Ein solches doppelbrechendes optisches Element stellt eine äußerst kompakte Form eines Interferometers mit zwei Armen dar. Ein erster Arm des Interferometers besteht in dem Weg des außerordentlichen Strahlanteils, ein zweiter Arm im Weg des ordentlichen Strahlanteils der im Resonator umlaufenden Strahlung. Die ganzzahlige Wellenplatte hat exakt eine solche Stärke, dass positive Interferenz der beiden Strahlanteile nach Durchlaufen der Wellenplatte stattfindet, und zwar für eine bestimmte Zielfrequenz $f_Z$. In einer bevorzugten Implementierung wird $f_Z$ in der Nähe der Trägerfrequenz $f_C$ der im Resonator umlaufenden Strahlung gewählt. Ändert man nun das Aufteilungsverhältnis an diesem Interferometer, beispielsweise durch Verändern der einfallenden Polarisation der Strahlung oder durch Drehen der ganzzahligen Wellenplatte selbst, so ändert sich die mittlere Gruppenumlaufverzögerung der Strahlung und damit die Repetitionsrate des Resonators. Generell gilt, dass die Zielfrequenz $f_Z$, für welche das Interferometer (bzw. eine spezielle Komponente des Interferometers) resonant ist, so gewählt ist, dass die Transmissionsverluste mit der Anwendung des Resonators kompatibel sind.

Zweckmäßig weist das Interferometer eines oder mehrere der folgenden optischen Elemente auf: Einen Polarisationsfilter, einen Polarisationssteller, eine $\lambda$-Platte, eine n $\lambda$-Platte mit n $\geq$ 2, eine $\lambda/2$-Platte, eine $\lambda/4$-Platte, einen Elektro-optischen Modulator (EOM) und/oder einen variabel einstellbaren Flüssigkristall oder ferroelektrischen Kristall. Dabei können der EOM oder der variabel einstellbare Flüssigkristall als ansteuerbares und damit veränderbares doppelbrechendes Element eingesetzt werden, insbesondere im Hinblick auf eine Veränderung der Polarisation oder Orientierung der Doppelbrechung und der damit verbundenen Änderung des Aufteilungsverhältnisses zwischen den Strahlanteilen auf den unterschiedlichen Interferometerarmen, z.B. auf den unterschiedlichen Achsen des einstellbaren doppelbrechenden Materials selbst bzw. eines weiteren doppelbrechenden Elements.

Denkbar ist es ferner, dass die erfindungsgemäße Resonatoranordnung einen linearen Aufbau hat bzw. eine lineare Strecke enthält, so dass das erfindungsgemäße Interferometer von der Laserstrahlung in beiden Richtungen durchlaufen wird. Dabei kann das Interferometer unter Ausnutzung einer Spiegelung aufgebaut sein, so dass Bauteile mehrfach genutzt werden und/oder eine höhere Stellgenauigkeit und Robustheit erreicht wird. Auch durch eine geometrische Faltung kann eine vorteilhafte Ausnutzung von Bauteilen sowie eine erhöhte Stabilität erreicht werden.

Die Resonatoren, insbesondere Resonatoren mit einer linearen Strecke, können dabei in besonderen Ausführungsformen auch eine nichtlineare optische Schleife (nonlinear optical loop mirror (NOLM) aufweisen oder einen andersgearteten sättigbaren Absorber, insbesondere eine Kerr-Linse oder einen halbleiter-basierten sättigbaren Absorber.

Zusätzlich zu den mindestens zwei Interferometerarmen des Interferometers mit Längen L1 und L2 kann ein mit diesem Interferometer verschachteltes Interferometer vorhanden sein. Dadurch kann um eine geeignete Grundstellung herum die Transmissionsbandbreite und/oder die Bandbreite der gewünschten Resonanzlinienverschiebung größer sein als ohne ein solches verschachteltes Interferometer. Erreicht werden kann eine solche Verschachtelung beispielsweise durch den Einsatz von mindestens zwei doppelbrechenden optischen Elementen, z.B. Wellenplatten, wobei die schnellen bzw. langsamen Achsen der doppelbrechenden Materialien im Wesentlichen einander entgegengesetzt sind. Zu der Veränderung des Aufteilungsverhältnisses wird die Orientierung der Wellenplatten zueinander verändert, insbesondere kann nur eine der beiden Wellenplatten in ihrer Orientierung verändert werden, und/oder es werden die Polarisationen der Strahlung an den beiden Wellenplatten in unterschiedlicher Weise beeinflusst.

Ideal eingesetzt werden kann die Erfindung sowohl mit einem ein Verstärkermedium aufweisenden Resonator oder auch mit einem sogenannten "kalten" Resonator, der kein Verstärkermedium für die in den Resonator eingekoppelte Strahlung aufweist.

Insbesondere kann die Erfindung vorteilhaft bei der Erzeugung von kurzen Pulsen bzw. Frequenzkämmen eingesetzt werden. Zu einem solchen Zweck befindet sich im Resonator neben dem Verstärkermedium ein Modenkoppelelement, das aktiv oder passiv sein kann. In Betracht kommen Amplituden- oder Phasenmodulatoren oder nichtlineare optische Elemente wie beispielsweise ein Kerr-Element, eine Kerr-Linse, eine nichtlineare optische Schleife und/oder ein halbleiterbasierter sättigbarer Absorber.

Ein erfindungsgemäßer Resonator mit einem oder mehreren verstärkenden Medien kann auch ohne modenkoppelndes Element vorteilhaft eingesetzt werden, um beispielsweise einen Laserresonator auf eine oder mehrere Injektionsquellen abzustimmen. Eine solche Injektionsquelle kann einzelne Laserfrequenzen zur Verfügung stellen, aber insbesondere auch ein frequenzkammartiges Spektrum aus einer Vielzahl von Komponenten, beispielsweise von einem modengekoppelten Laser.

Darüber hinaus kann ein erfindungsgemäßer Resonator innerhalb eines modengekoppelten Lasers eingesetzt werden, um die Lasermoden weiter zu filtern und auf diese Weise harmonische Modenkopplung des umgebenden Laserresonators hervorzurufen.

Mehrere erfindungsgemäße Resonatoren können vorteilhaft innerhalb eines Systems verwendet werden, sowohl hintereinander, als auch ineinander verschachtelt.

Es können ebenso innerhalb eines Resonators mehrere Interferometer hintereinander oder ineinander verschachtelt vorhanden sein. Insbesondere können mehrere Stellelemente vorhanden sein. Vorteilhaft können gleichzeitig Stellelemente verwendet werden, welche die Resonatormoden um unterschiedliche Fixpunktfrequenzen $f_{fix}$ und $f'_{fix}$ strecken bzw. stauchen.

Ein erfindungsgemäßer Resonator kann vorteilhaft mit oder ohne verstärkendes Medium zur Filterung und/oder Überhöhung eingekoppelter Strahlung verwendet werden. Die Filterung kann beispielsweise zu einer Vervielfachung der Pulswiederholrate eingekoppelter Laserstrahlung verwendet werden. In einer vorteilhaften Ausführung ist hierbei der Modenabstand des erfindungsgemäßen Resonators ein ganzzahliges Vielfaches der an den Resonator angekoppelten Strahlung. In weiteren Ausführungen kann der erfindungsgemäße Resonator einen Modenabstand aufweisen, der zum Modenabstand der einfallenden Strahlung ein von eins verschiedenes rationales Teilungsverhältnis aufweist. Auf diese Weise können mehrere Pulse gleichzeitig im erfindungsgemäßen Resonator umlaufen, wobei gleichzeitig zur Einkopplung mehrerer Pulse eine Filterung der beteiligten Modenfrequenzen erfolgen kann. Ein Umlaufen mehrerer Pulse ohne gleichzeitige Filterung findet statt, wenn sich das Teilungsverhältnis als 1/k schreiben lässt, wobei k eine ganze Zahl ist.

Eine resonatorinterne Überhöhung ist insbesondere für das Treiben nichtlinearer Prozesse sinnvoll, insbesondere für die Bereitstellung von UV- und EUV-Licht durch die Erzeugung hoher harmonischer Frequenzen in Gasjets. Nachteilhaft ist hier bisher, dass das resonatorinterne Medium, welches zur Erzeugung der hohen Harmonischen verwendet wird, bei der Erzeugung der harmonischen Frequenzen seinen Brechungsindex und insbesondere seine Dispersion so stark ändert, dass der Resonator gegen die eingekoppelte Strahlung verstimmt wird. Die hier vorgestellte Erfindung ermöglicht ein schnelles Nachregeln des Resonators sowohl in Bezug auf Resonanzlage als auch Resonanzabstand. Ebenso kann eine Überhöhung vorteilhaft für die Erzeugung von Licht bei der 2. Harmonischen der Grundwelle, die Bereitstellung von Licht mittels Summen- und Differenzfrequenzerzeugung, sowie für die Erzeugung und Verstärkung von Licht mittels optischer parametrischer Prozesse genutzt werden.

Die Erfindung kann des Weiteren genutzt werden, um die Lage der Resonanzen einer Resonatoranordnung auf eine Reihe von Zielresonanzen anzupassen. Beispielsweise kann die Position von zwei oder drei Resonanzen gezielt eingestellt werden. Eine vorteilhafte Anwendung kann die Überhöhung von Dauerstrichlasern bei der Summenfrequenzbildung sein, ebenso die Abstimmung von optischen parametrischen Oszillatoren (OPOs). Vorteilhaft lässt sich die Erfindung ferner für Referenzresonatoren einsetzen. Beispielsweise erlaubt die Erfindung, zwei auf einen gemeinsamen Resonator stabilisierte Laser relativ zueinander in der Frequenz zu verstimmen, ohne beispielsweise ihren Mittelwert zu verändern. Es kann vorteilhaft sein, in diesem Zusammenhang Wellenplatten zu verwenden, welche für die verwendeten Wellenlängen jeweils eine Phasenverschiebung von einem ganzzahligen Vielfachen von $2\pi$ aufweisen, beispielsweise $2\times2\pi$ für eine erste Wellenlänge und $3\times2\pi$ für eine zweite Wellenlänge.

Die Erfindung bezieht sich darüber hinaus auch auf ein Verfahren zum Einstellen einer Repetitionsrate eines Resonators oder einer Gruppenumlaufzeit und / oder einer Phasenumlaufzeit von in einem Resonator umlaufenden Pulsen. Das Einstellen der Gruppenumlaufzeit ist gleichbedeutend mit dem Einstellen einer Repetitionsrate des Resonators. Das erfindungsgemäße Verfahren zeichnet sich dadurch aus, dass ein Interferometer mit zwei oder mehr Armen im Resonator angeordnet ist, und dass ein Aufteilungsverhältnis verändert oder gezielt eingestellt wird, mit dem das Interferometer die im Resonator umlaufenden Pulse in verschiedene Pulsanteile aufteilt. Dadurch ergeben sich die vorstehend geschilderten Vorteile.

Das Verfahren kann zweckmäßigerweise die Verwendung eines oder mehrerer der vorstehend oder im Zusammenhang mit den Zeichnungen geschilderten, konstruktiven Merkmale beinhalten.

Wenn gewünscht, erlaubt es die Erfindung, beim Verändern des Aufteilungsverhältnisses auf die verschiedenen Interferometerarme die Gruppenumlaufzeit der im Resonator umlaufenden Pulse zu verändern, ohne gleichzeitig eine Phasenumlaufzeit der Trägerwelle im Resonator zu ändern. Dies erlaubt es, während der Veränderung der Gruppenumlaufzeit (d.h. der Repetitionsrate) eine bestimmte Frequenz $f_{fix}$ im Bereich der Trägerfrequenz $f_C$ in ihrer Frequenz exakt konstant zu halten, d.h. die Moden des vom Resonator erzeugten Frequenzkamms exakt um diese konstante Frequenz ziehharmonikaartig oder fächerartig auseinander (oder aufeinander zu) zu bewegen. Vorteilhaft ist dies insbesondere, wenn eine Stabilisierung des Resonators auf diese konstante Frequenz $f_{fix}$ bzw. eine nahe benachbarte Frequenz stattfindet.

Andererseits ist es jedoch ebenso gut möglich, gleichzeitig die Gruppenumlaufzeit von Pulsen und die Phasenumlaufzeit der Trägerwelle zu verändern, wenn das Aufteilungsverhältnis der Strahlung auf die beiden Interferometerarme verändert wird. Ein solcher Effekt kann beispielsweise durch eine zusätzliche Phasenverschiebung erreicht werden, welche z.B. bei der Einstellung des Aufteilungsverhältnisses auftreten kann. In einem gewissen Rahmen kann dies außerdem geschehen, indem die im Interferometer resonante Frequenz $f_Z$ von der Trägerfrequenz $f_C$ verschieden gewählt wird. Im Frequenzraum bedeutet dies, dass der Fixpunkt, um den sich der Frequenzkamm insgesamt fächerartig auseinander bewegt (oder aufeinander zu) bewegt, nicht mit der Trägerfrequenz der Pulse zusammenfällt. Insbesondere kann die Fixpunktfrequenz $f_{fix}$ außerhalb des im Resonator umlaufenden Spektrums liegen.

Günstig ist es, wenn sich die Umlaufverluste der im Resonator umlaufenden Pulse beim Verändern des Aufteilungsverhältnisses, bei dem das Interferometer die im Resonator umlaufenden Pulse in den ersten und zweiten Pulsanteil aufteilt, idealerweise überhaupt nicht oder aber nur sehr geringfügig ändern, beispielsweise um weniger als 1%, 5%, 10% oder um maximal 20%. Damit wird die mittlere Leistung der den Resonator verlassenden Strahlung unabhängig von einer Veränderung der Repetitionsrate bzw. Umlaufzeit.. Dies vermindert die Erzeugung von Intensitätsschwankungen bei der Einstellung der Repetitionsrate, welche insbesondere bei aktiven Resonatoren ein meist unerwünschtes Übersprechen auf weitere Laserparameter hervorrufen. Die oben genannten Prozentzahlen beziehen sich auf eine Veränderung der Pulswiederholrate $f_{rep}$ um $f_{rep}/m$, wobei $m$ die longitudinale Modenzahl im Resonator gemäß Gleichung (1) ist, bzw. auf eine Veränderung der Träger-Einhüllenden-Offsetfrequenz $f_0$ um den Modenabstand $f_{rep}$. Für geringere Veränderungen der Pulswiederholrate wird die Transmissionsänderung entsprechend kleiner.

In einfacher Weise lässt sich das Interferometer für polarisierte Strahlung im Resonator realisieren und einstellen, wenn als Interferometer mindestens eine ganzzahlige Wellenplatte für eine Zielwellenlänge $\lambda_Z$ der im Resonator umlaufenden Pulse verwendet und zum Einstellen des Aufteilungsverhältnisses um eine optische Achse des Resonators gedreht wird. Alternativ lässt sich die an der Wellenplatte einfallende Polarisation drehen bzw. in ihrem Grad der Elliptizität ändern.

In typischen Anwendungen dieser Art ist die Polarisation an mindestens einer Stelle im Resonator fixiert, beispielsweise durch ein polarisationsselektives Element, insbesondere einen Polarisationsfilter oder einen Polstrahlteiler. Optische Elemente, welche die am Interferometereingang vorhandene Polarisation ändern, befinden sich im Resonator. Denkbar ist aber auch, dass sich im Resonator lediglich das Interferometer befindet und die Polarisation von außen vorgegeben wird, beispielsweise durch eine in den Resonator eingekoppelte Strahlung. Bereits erwähnt wurde, dass im Interferometer eine Aufteilung stattfinden kann auf mehr als zwei Pulsanteile auf ebenso vielen, d.h. mehr als zwei Interferometerarmen, und dass ein Aufteilungsverhältnis variabel eingestellt wird, mit dem das Interferometer die im Resonator umlaufenden Pulse auf zwei oder mehr dieser Interferometerarme aufteilt.

Besonders zweckmäßig kann es für die Erfindung sein, wenn die konstante Frequenz $f_{fix}$ wenigstens das 1,1fache der Trägerfrequenz $f_C$ beträgt, also $f_{fix} >$

1.1f$_C$. Ebenso kann es zweckmäßig sein, wenn wenn die konstante Frequenz f$_{fix}$ größer als ein Zehntel und gleichzeitig kleiner als das 0,9fache der Trägerfrequenz f$_C$ ist, also 0.1f$_C$ < f$_{fix}$ < 0.9 f$_C$.

Im Folgenden werden vorteilhafte Ausführungsbeispiele der Erfindung anhand einer Zeichnung näher dargestellt. Im Einzelnen zeigen:

Figur 1a: zwei aufeinanderfolgende Laserpulse eines Pulszuges und die dazugehörige Trägerwelle, wobei auf der Horizontalachse die Zeit und auf der Vertikalachse das elektrische Feld aufgetragen ist,

Figur 1b: den zu den Laserpulsen aus Figur 1a gehörigen Frequenzkamm, wobei auf der Horizontalachse die Frequenz und auf der Vertikalachse die Intensität bei der jeweiligen Frequenz aufgetragen ist,

Figur 2: ein erstes Ausführungsbeispiel einer Resonatoranordnung mit einem Ringresonator,

Figur 3: ein zweites Ausführungsbeispiel einer Resonatoranordnung mit einem linearen Resonator,

Figur 4: eine schematische Darstellung eines Interferometers in der Resonatoranordnung,

Figur 5a: einen Frequenzkamm entsprechend Figur 1b mit Repetitionsrate f$_{rep}$,

Figur 5b: einen zweiten Frequenzkamm mit einer veränderten Repetitionsrate f'$_{rep}$,

Figur 6: ein Ausführungsbeispiel eines Aufteilungsstellgliedes des Interferometers,

Figur 7: ein zweites Ausführungsbeispiel eines Interferometers,

Figur 8: ein drittes Ausführungsbeispiel eines Interferometers,

Figur 9: ein viertes Ausführungsbeispiel eines Interferometers,

Figur 10: ein Ausführungsbeispiel eines Polarisationsstellers und

Figur 11: ein Ausführungsbeispiel eines Filter- bzw. Überhöhungsresonators.Gleiche Komponenten sind in den Figuren durchgängig mit gleichen Bezugszeichen versehen.

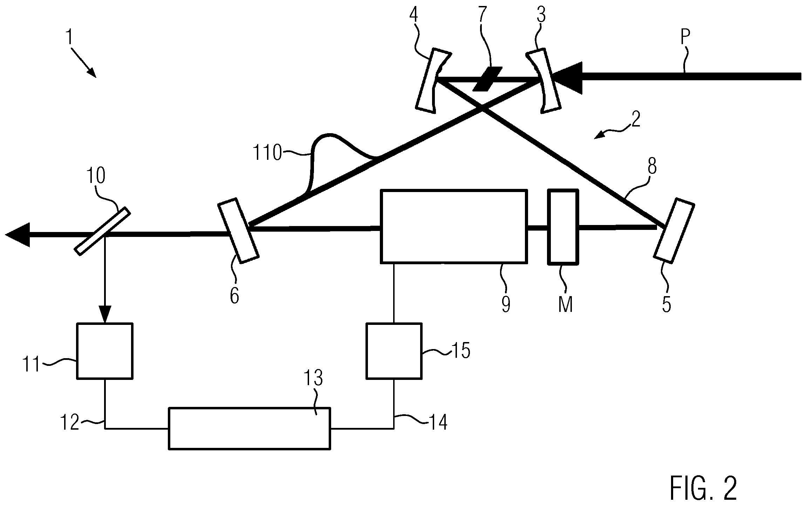

Figur 2 zeigt schematisch eine erfindungsgemäße Resonatoranordnung 1 mit einem Resonator 2, der hier als Ringresonator ausgebildet ist. Der Resonator 2 umfasst zwei gekrümmte Spiegel 3, 4 sowie zwei plane Umlenkspiegel 5, 6. Zwischen den beiden gekrümmten Spiegeln 3, 4, insbesondere am Ort des durch die konkave Krümmung der beiden Spiegel 3, 4 definierten Fokus, ist ein Lasermedium 7 angeordnet, beispielsweise ein Laserkristall wie Ti:Sa. Der eine gekrümmte Spiegel 3 ist teiltransparent und dient so als Einkoppelspiegel zum Einkoppeln von Pumplicht P in den Resonator 2. Der eine plane Spiegel 6 ist ebenfalls teiltransparent für die auf der gefalteten Achse des Resonator 2 umlaufende Strahlung 8 und dient somit als Auskoppelspiegel zum Auskoppeln der Laserstrahlung aus dem Resonator 2. Die Strahlung 8 läuft in Form eines oder mehrerer exemplarisch dargestellter Pulse 110 (siehe auch Figur 1a) im Resonator 2 um. Der Resonator ist durch die optische Weglänge zwischen den Spiegeln 3 bis 6 dazu eingerichtet, resonant zu sein für die Trägerwelle 120 mit Frequenz f$_c$.

Im Inneren des Ringresonator 2 befindet sich ein Interferometer 9. Die Konfiguration dieses Interferometers und seine Bedeutung für die Erfindung werden nachfolgend genauer erläutert werden. Außerdem weist der Resonator 2 in diesem Ausführungsbeispiel ein Modenkoppelelement M auf, beispielsweise einen Kerr-Lens-Modenkoppler (KLM), einen halbleiterbasierten sättigbaren Absorber oder eine nichtlineare optische Schleife.

Außerhalb des Ringresonators 2 weist die Resonatoranordnung 1 im Strahlgang der Strahlung 8 einen Strahlteiler 10 auf, der einen Teil der Laserstrahlung 8 auf eine Messvorrichtung 11 lenkt. Die Messvorrichtung 11 ist dazu konfiguriert, eine oder mehrere der Eigenschaften den Resonator 2 verlassenden Strahlung 8 zu detektieren, beispielsweise die Pulswiederholfrequenz oder (synonym) Repetitionsrate, mit der Laserpulse 110 den Resonator 2 verlassen, die exakte Lage einer bestimmten Mode f$_c$ eines den Resonator 2 verlassenden Frequenzkamms und/oder eine (mittlere) Ausgangsleistung des Resonators 2.

Die Messvorrichtung 11 kann zu diesem Zweck auch eine geeignete Gruppe von mehreren Messeinrichtungen oder Sensoren aufweisen, beispielsweise eine Fotodiode.

Über eine Datenleitung 12 wird ein Messsignal von der Messvorrichtung 11 an eine Auswerte- und Steuereinheit 13 übermittelt, bei der es sich beispielsweise um eine Regelelektronik, einen Rechner oder eine CPU handeln kann. Die Auswerte- und Steuereinheit ist geeignet konfiguriert und/oder programmiert, um Informationen aus dem Messsignal zu generieren, und um Abweichungen des Messsignals von vorgegebenen, gegebenenfalls einprogrammierbaren Ziel- und Schwellenwerten zu ermitteln. Die Auswerte- und Steuereinheit steuert anschließend über eine geeignete Steuerleitung 14 ein Stellglied 15 an, das am Interferometer 9 angreift. Das Stellglied 15 ist dazu konfiguriert, das Aufteilungsverhältnis zu verändern oder einzustellen, mit dem die im Resonator 2 umlaufende Strahlung 8 auf verschiedene Arme des Interferometers 9 aufgeteilt wird.

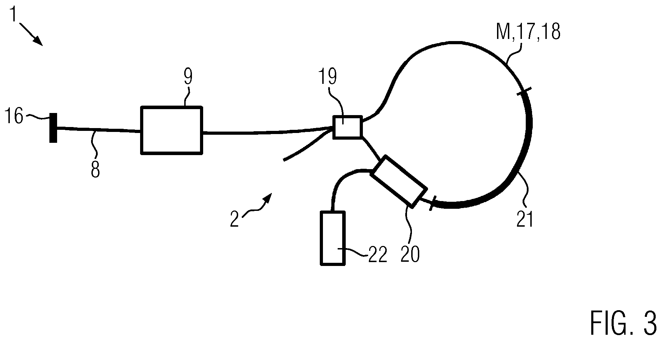

Figur 3 zeigt ein zweites Ausführungsbeispiel einer erfindungsgemäßen Resonatoranordnung 1, diesmal mit einem "linearen Resonator" 2. Der eine Resonatorendspiegel ist ein planer Spiegel 16. Dieser Spiegel 16 kann als teildurchlässiger Auskoppelspiegel des Resonators 2 konfiguriert sein. Der andere Resonatorendspiegel hingegen ist in diesem Ausführungsbeispiel Modenkoppelelement M in Form eines nicht-linearen optischen Ringspiegels (Nonlinear Optical Loop Mirror, NOLM) 17, welcher hier als verstärkender Ringspiegel (Nonlinear Amplifying optical Loop Mirror, NALM) ausgeführt ist. Der NALM weist eine optische Faser 18 auf, deren beide Enden in einem Strahlteiler beziehungsweise Koppler 19 zusammengeführt sind. Der Koppler 19 koppelt den NALM mit einem linearen Teil des Resonators 2. Im NALM, d.h. im Ringspiegel 17 befinden sich ein Verstärkerabschnitt 21, d.h. ein mit geeigneten Fremdatomen dotierter Bereich der Faser 18, der über einen Pumpkoppler 20 durch eine optische Pumplichtquelle 22 angeregt wird. Auf dem linearen Teil des Resonators, d.h. zwischen dem planen Endspiegel 16 und dem Ringspiegel 17, ist erfindungsgemäß ein Interferometer 9 angeordnet.

Anstelle des verstärkenden nichtlinearen Ringspiegels 17 kann der lineare Resonator 2 in Figur 3 auch einen weiteren planen Endspiegel oder ein anders geartetes Element der optischen Rückreflexion aufweisen, beispielsweise ein optisches Gitter, ein Bragg-Gitter, ein Faser-Bragg-Gitter oder einen ggf. nicht-verstärkenden, optisch linearen oder nichtlinearen, Ringspiegel. Außerdem kann der Weg der Strahlung 8 zwischen den beiden Resonatorendspiegeln 16, 17 gefaltet sein, beispielsweise V-, Z- oder W-förmig, um eine kompaktere Resonatoranordnung 1 zu erhalten. Auch solche gefalteten Resonatoranordnungen werden im Sinne der Erfindung als "lineare Resonatoren" verstanden, solange sich Strahlung auf dem sogenannten linearen Abschnitt in beiden Richtungen, und zwar auf dem Hin- und auf dem Rückweg, ausbreitet.

An dieser Stelle sei darauf hingewiesen, dass jede Form der erfindungsgemäßen Resonatoranordnung 1 wahlweise mit aktivem Lasermedium 7 ausgestattet sein kann (wie exemplarisch in Figur 2 und 3 gezeigt) oder aber ohne aktives Lasermedium, d.h. als "kalter" Resonator.

Die Resonatoranordnung 1 gemäß Figur 3 verfügt ebenso wie das Ausführungsbeispiel nach Figur 2 über die Elemente 10 bis 15, d.h. einen Strahlteiler 10, eine Messvorrichtung 11, eine Auswerte- und Steuereinheit 13, Daten- und Steuerleitungen 12, 14 sowie über ein Stellglied 15, das zum Einstellen und Verändern des Aufteilungsverhältnisses der Strahlung 8 auf die zwei oder mehr Arme des Interferometers 9 konfiguriert ist. Diese Komponenten sind in Figur 3 lediglich der Übersichtlichkeit halber nicht dargestellt.

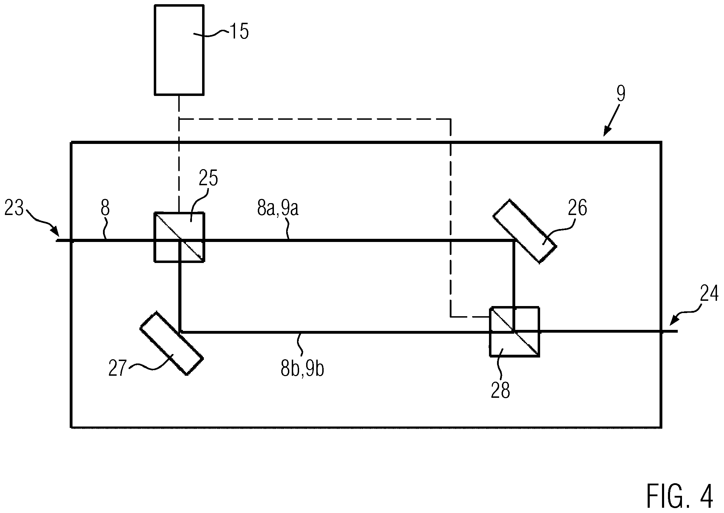

Figur 4 zeigt in Form einer Prinzipskizze ein erstes Ausführungsbeispiel eines Interferometers 9 in der erfindungsgemäßen Resonatoranordnung 1. An einem Eingang 23 gelangt die Strahlung 8 in das Interferometer 9, während die Strahlung das Interferometer 9 an einem Ausgang 24 wieder verlässt. Das Interferometer 9 verfügt ferner über einen ersten Strahlteiler 25, der die einfallende Strahlung 8 aufteilt in einen ersten Anteil 8a entlang eines ersten Interferometerarms 9a und in einen zweiten Strahlanteil 8b, der einen zweiten Interferometerarm 9b durchläuft.

In jedem der beiden Interferometerarme 9a, 9b ist ein Spiegel 26, 27 vorgesehen. Er lenkt die Strahlung 8a, 8b in jeweiligen Interferometerarme 9a, 9b auf einen zweiten Strahlteiler 28, an dem die Strahlungs- oder Pulsanteile 8a, 8b aus den beiden Interferometerarmen 9a, 9b miteinander interferieren, bevor das Licht am Ausgang 24 das Interferometer 9 verlässt.

Wichtig für die Erfindung ist, dass der erste Interferometerarm 9a eine andere optische Weglänge $L_g1$ aufweist als die optische Weglänge $L_g2$ des zweiten Interferometerarms 9b. Die optische Weglänge $L_g1$, $L_g2$ ist dabei jeweils definiert als das Integral über das Produkt der geometrischen Länge mit dem Brechungsindex für den jeweiligen Interferometerarm 9a beziehungsweise 9b. Im Rahmen dieser Erfindung ist die Unterscheidung zwischen Gruppen- und Phasengeschwindigkeit von Bedeutung, weshalb die optische Weglänge sowohl für das Gruppenzentrum eines Pulses (Index "g") als auch für die Phase der Trägerwelle (Index "ph") angegeben werden kann. Bei der Berechnung im Integral kommen die jeweiligen Brechungsindizes $n_g$ bzw. $n_{ph}$ zum Tragen. Bedeutsam für die Erfindung ist zunächst die Unterschiedlichkeit der Gruppen-Weglängen entlang der Interferometerarme. Auch wenn die geometrische Weglänge gleich ist, wie in Figur 4 zu sehen, können sich die optischen Weglängen $L_g1$, $L_g2$ voneinander unterscheiden, wenn entlang eines der beiden Interferometerarme 9a, 9b zumindest abschnittsweise ein Material mit einem anderen Brechungsindex vorgesehen ist als auf dem anderen Interferometerarm 9a, 9b.

Nicht zwingend, aber für verschiedene Anwendungen durchaus vorteilhaft ist eine Konfiguration, bei der der Betrag der Differenz zwischen den beiden optischen (Phasen-) Weglängen $L_{ph}1$, $L_{ph}2$ exakt der Wellenlänge $\lambda$ oder einem ganzzahligen Vielfachen $n \times \lambda$ einer Trägerwelle 120 entspricht, bei welcher der Resonator betrieben wird. Die optischen Weglängen $L_{ph}1$, $L_{ph}2$ auf den beiden Interferometerarmen 9a, 9b sind vorzugsweise während des Betriebs der Resonatoranordnung 1 konstant.

Erfindungsgemäß ist das Aufteilungsverhältnis variabel einstellbar, mit dem der erste Strahlteiler 25 die eintreffende Strahlung 8 in einen ersten Strahlanteil 8a und in einen zweiten Strahlanteil 8b austeilt, die dann jeweils entlang eines der beiden Interferometerarme 9a, 9b das Interferometer 9 durchlaufen. Der Anteil 8a im ersten Interferometerarm 9a kann dabei beispielsweise zwischen 0% und 100% stufenlos variiert werden, aber auch über kleinere Bereiche wie beispielsweise von 0% bis 1%, 0% bis 5% oder 47%-53% oder 40% - 60% eingestellt werden. Eine sinnvolle Wahl orientiert sich sowohl am zu erreichenden Hub der Änderung der Gruppenumlaufzeit als auch an der gewünschten optischen Bandbreite des Interferometers. Kürzere Pulse benötigen typischerweise eine größere Bandbreite. Der komplementäre, zweite Strahlanteil 8b gelangt dann vom Strahlteiler 25 jeweils in den zweiten Interferometerarm 9b. In einer sehr einfachen Ausführungsform ist das Aufteilungsverhältnis durch manuelles Verstellen des Strahlteilers 25 veränderbar. In einer komfortableren Ausführungsform ist, wie in den Figur 2 und 3 gezeigt, ein Stellglied 15 vorgesehen, das automatisch, d.h. ohne zusätzliches Eingreifen eines Benutzers, am Strahlteiler 25 und/oder am Strahlteiler 28 angreifen kann, um das Aufteilungsverhältnis auf die beiden Interferometerarme 9a, 9b zu ändern.

Für den Spezialfall, in dem der Betrag der Weglängendifferenz $L_{ph}1-L_{ph}2$ zwischen den beiden Interferometerarmen 9a, 9b einem ganzzahligen Vielfachen n x $\lambda_C$, mit n $\geq$ 1, einer im Resonator 2 resonanten Trägerwellenfrequenz $f_C$ entspricht, zeigen die Figuren 5a und 5b, was die Erfindung zu leisten im Stande ist. Figur 5a zeigt dabei noch einmal den gleichen Frequenzkamm wie bereits Figur 1b mit einem der Pulswiederholrate (Repetitionsrate) des Resonators 2 entsprechenden Abstand $f_{rep}$ zwischen benachbarten, insgesamt äquidistanten Moden sowie einer Träger-Einhüllenden-Offset-Frequenz (oder Carrier-Envelope-Offset-Frequenz: CEO-Frequenz) $f_0$. Sein Intensitätsmaximum erreicht der Frequenzkamm bei der Frequenz $f_C$. In der hier skizzierten Variante ist das Interferometer 9 so eingestellt, dass die Trägerwelle mit Frequenz $f_C$ (und Wellenlänge $\lambda_C$=c/$f_C$) konstruktiv am Ausgang des Interferometers 9 interferiert. Figur 5a ergibt sich beispielsweise bei einem Aufteilungsverhältnis A = a : b, wobei a den Anteil der Strahlung im ersten Interferometerarm 9a bezeichnet, b hingegen den Anteil der Strahlung im zweiten Interferometerarm 9b.

Betrachtet wird der Fall, in dem die optische Weglänge $L_g1$ im ersten Interferometerarm 9a kleiner ist als die optische Weglänge $L_g2$ im zweiten Interferometerarm 9b. Im erfindungsgemäßen Verfahren, d.h. beim Betrieb der erfindungsgemäßen Resonatoranordnung 1, wird nun das Aufteilungsverhältnis A geändert, beispielsweise zu einem zweiten Aufteilungsverhältnis A' = a' : b' = (a + x) : (b - x). Mit anderen Worten wird der Strahlteiler 25 manuell oder automatisch durch das Stellglied 15 so verändert, dass ein größerer Anteil der Strahlung 8 in den ersten, "kürzeren" Interferometerarm 9a gelangt. Zwar bleiben die beiden optischen Weglängen $L_g1$, $L_g2$ dabei konstant, so dass weiterhin das Licht mit der Frequenz $f_C$ konstruktiv am Ausgang des Interferometers 9 interferiert. Durch die Veränderung des Aufteilungsverhältnisses erfährt jedoch ein größerer Anteil der Strahlung 8 eine kürzere Gruppenumlaufzeit im Resonator 2 als bisher. Folglich verringert sich die mittlere Gruppenumlaufzeit der Strahlung 8 im Resonator 2 und erhöht sich damit die Repetitionsrate des Resonators 2 zu einem neuen, größeren Wert $f'_{rep}$. Zu sehen ist dies in Figur 5b, die den resultierenden Frequenzkamm mit dem neuen Modenabstand $f'_{rep}$ darstellt.

Am Fixpunkt, d.h. der Resonanzfrequenz $f_C$, ist weiterhin das Intensitätsmaximum des Frequenzkamms, und der Resonanzpunkt $f_C$ ist unverschoben. Um diesen Fixpunkt $f_C$ herum sind jedoch die übrigen Moden fächerförmig oder ziehharmonikaartig "aufgespreizt" worden. Dadurch hat sich gleichzeitig auch die Offset-Frequenz $f_0$ verändert. In diesem Ausführungsbeispiel ist die Repetitionsrate des Resonators 2 sogar so stark verändert worden, dass die bisherige Offset-Frequenz $f_0$ gleichsam über die Nulllinie hinaus verschoben wurde, so dass jetzt eine neue Linie des Resonators die neue Offset-Frequenz $f'_0$ bildet.

In umgekehrter Richtung arbeitet die erfindungsgemäße Resonatoranordnung 1 selbstverständlich entsprechend. Würde also ausgehend vom Aufteilungsverhältnis A (siehe Figur 5a) ein größerer Anteil der umlaufenden Strahlung 8 auf den zweiten, "längeren" Interferometerarm 9b gegeben, so erhöht sich die mittlere Gruppenumlaufzeit, so dass die Repetitionsrate $f_{rep}$ ausgehend von Figur 5a kleiner wird. Der Frequenzkamm zieht sich dabei gleichsam um den Fixpunkt $f_C$ zusammen.

Denkbar sind auch Konfigurationen, bei denen der Resonator 2 nach dem Verändern des Aufteilungsverhältnisses nicht mehr für die Trägerfrequenz $f_C$ resonant ist, sondern für eine neue Resonanzfrequenz. In diesem Fall würde sich der gesamte Frequenzkamm um einen Fixpunkt $f_{fix}$ auffächern oder zusammenziehen, der von der Trägerfrequenz fc verschieden ist.

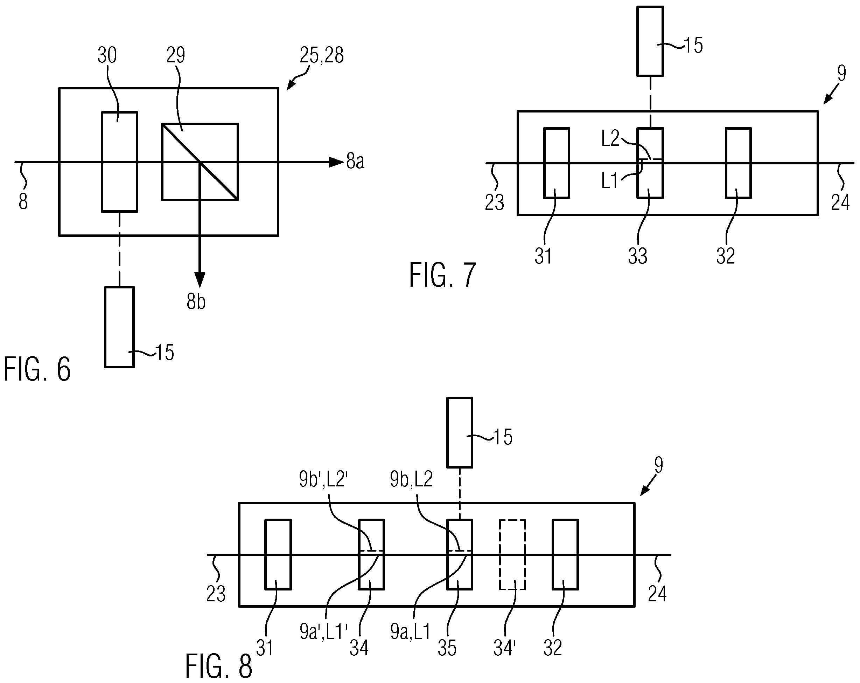

Figur 6 zeigt eine erste Möglichkeit, wie das Interferometer 9, speziell dessen Strahlteiler, makroskopisch realisiert werden kann. Jeder der beiden Strahlteiler 25, 28 aus Figur 4 ist hier konfiguriert als Kombination eines Polarisationsstrahlteilers 29 und eines Polarisationsstellers 30. Dabei kann der Polarisationssteller 30 ein doppelbrechendes Element sein, konkret eine rotierbare Halbwellenplatte 30, die angesteuert durch das Stellglied 15 rotiert werden kann. Eine Änderung der Rotationsstellung der Halbwellenplatte 30 bewirkt eine Änderung des Aufteilungsverhältnisses der einfallenden Strahlung 8 auf die beiden Strahlanteile 8a, 8b für die beiden Interferometerarme 9a, 9b.

Figur 7 zeigt ein zweites Ausführungsbeispiel eines Interferometers, das deutlich robuster als die erste Variante ist. Das Interferometer 9 hat in Figur 7 ebenfalls einen Eingang 23 und einen Ausgang 24, zwischen denen sich ein erster und ein zweiter Polarisator 31, 32 sowie dazwischen ein doppelbrechendes Element 33, hier konkret eine ganzzahlige Wellenplatte mit n x $\lambda$, wobei n $\geq$ 1, mit variabel einstellbarer Orientierung befindet. Die beiden Polarisatoren 31, 32 sind in dieser Ausführungsform optional, da bei der Verwendung im Resonator 2 typischerweise bereits ein anderes polarisierendes oder polarisationsselektives Element vorhanden ist. Außerdem kann in einigen Fällen die Polarisation von außen vorgegeben werden, beispielsweise durch die Polarisation einer eingekoppelten Strahlung. Der Vorteil eines polarisierenden Elementes innerhalb des Resonators besteht darin, die Doppelmodigkeit des Resonators und die gegebenenfalls damit verbundene Polarisationsmodenaufspaltung zu vermeiden.

Die $n\lambda$-Wellenplatte 33 spaltet an ihrer Oberfläche die einkommende Strahlung 8 auf in einen ersten Strahlanteil 8a entlang der ordentlichen Achse und in einen zweiten Strahlanteil 8b entlang der außerordentlichen Achse des doppelbrechenden Kristalls. An der Austrittsfläche der Wellenplatte 33 werden die beiden Strahlanteile 8a, 8b wieder konstruktiv miteinander überlagert, wobei die Weglängendifferenz $L_{ph}1 - L_{ph}2$ ein ganzzahliges Vielfaches einer Wellenlänge der Fixpunkt-Frequenz $f_{fix}$ beträgt. Die beiden Wege des ordentlichen und des außerordentlichen Strahlanteils 8a, 8b liegen hier geometrisch übereinander, sind also geometrisch zueinander identisch. Sie unterscheiden sich jedoch in ihrem Brechungsindex und damit in ihren optischen Weglängen L1, L2. Schematisch wird dies in Figur 7 angedeutet. Die beiden Arme 9a, 9b des Interferometers 9 erstrecken sich hier also in Axialrichtung des Resonators 2 zwischen den beiden Oberflächen des doppelbrechenden Elements 33.

Eine Veränderung des Aufteilungsverhältnisses und damit der mittleren Gruppenumlaufgeschwindigkeit, letztendlich der Repetitionsrate des Resonators 2, wird in diesem Ausführungsbeispiel durch ein Drehen der Wellenplatte 33 erreicht. Bei einer Ausführungsform mit einem Stellglied 15 kann dieses also in Form eines Dreh-Aktuators an der Wellenplatte 33 angreifen.

Die Abhängigkeit der mittleren Gruppenumlaufverzögerung vom Aufteilungsverhältnis der beiden Teilstrahlen 8a, 8b ist umso größer, je stärker sich die Gruppenverzögerungen in den beiden Interferometerarmen 9a, 9b voneinander unterscheiden, d.h. je größer der Betrag der Differenz $L_{ph}1-L_{ph}2$ ist. Bei der Implementation über eine Wellenplatte 33 lässt sich durch eine höhere Ordnung n der Wellenplatte folglich eine größere Winkelempfindlichkeit erreichen, d.h. eine stärkere Änderung der Repetitionsrate des Resonators 2 bei gleicher Drehung der Wellenplatte 33. Die größte Winkelempfindlichkeit wird um die Winkel +/- 45° erreicht, d.h. wenn beide Interferometerarme etwa gleiche Strahlanteile führen. Eine zu hohe Ordnung n der ganzzahligen $n\lambda$-Wellenplatte bedeutet allerdings gleichzeitig eine starke Wellenlängenabhängigkeit der Transmission und/oder der beabsichtigten Linienverschiebung, so dass dadurch die Bandbreite der Resonatoranordnung 1 begrenzt wird.

Figur 8 zeigt ein alternatives Ausführungsbeispiel des Interferometers 9. Hier sind statt eines einzelnen doppelbrechenden Elements zwei doppelbrechende Elemente 34, 35 vorgesehen, die sich wiederum zwischen den (optionalen) Polarisatoren 31, 32 befinden. Bei den beiden doppelbrechenden Elementen 34, 35 handelt es sich jeweils um eine ganzzahlige Wellenplatte 34, 35 für dieselbe Wellenlänge $\lambda_Z$ der resonanten Fre-

quenz $f_Z$. In einer bevorzugten Variante haben die Wellenplatten 34, 35 Ordnungen n bzw. n', welche sich nicht oder nur wenig voneinander unterscheiden (z.B. |n-n'|=0). Wiederum in einer bevorzugten Variante sind diese Wellenplatten sind so zueinander orientiert, dass sie im Wesentlichen einander entgegengesetzt, d.h. unter einem Winkel von etwa 90° zueinander stehen. Mindestens eine der beiden Wellenplatten, beispielsweise die zweite Wellenplatte 35, besitzt eine variable Orientierung, und sinnvollerweise ist die einfallende Polarisation unter etwa 45° zu den optischen Achsen der Wellenplatten. In dieser Anordnung wird das einstellbare doppelbrechende Element 35 wie Element 33 in Fig. 7 verwendet wird, während das starre doppelbrechende Element 34 die Doppelbrechung des einstellbaren Elementes 35 in dessen Grundstellung kompensiert. Auf diese Weise wird eine hohe optische Transmissionsbandbreite der Anordnung erreicht.

In einer komplexeren Darstellung lässt sich die in Figur 8 skizzierte Anordnung als Vierarminterferometer beschreiben. Die Weglängen L1+L1', L1+L2', L2+L1' und L2+L2' dieses Vierarm-Interferometers mit den auch hier geometrisch zueinander identischen Armen 9aa', 9ab', 9ba' und 9bb' sind in Figur 8 dargestellt, wobei der Übersichtlichkeit halber wieder die Anteile der zweiten Interferometerarme 9b, 9b' leicht seitlich versetzt zu den Anteilen der ersten Interferometerarme 9a, 9a' dargestellt sind. Im Gegensatz zur Variante nach Figur 7 hat die Ausführungsform des Interferometers 9 nach Figur 8 den Vorteil, dass in der rotationsempfindlichen Grundstellung alle Strahlanteile in den beiden Interferometerarmen mit Länge L1+L2' bzw. L2+L1' geführt werden. Bei einem geringen Unterschied der Wellenplattenordnungen n und n', insbesondere für n=n', bedeutet dies, dass die Transmission des Interferometers 9 keine Wellenlängenabhängigkeit besitzt bzw. die wellenlängenabhängigen Verluste geringer sind als ohne die kompensierende Wellenplatte. Bei Abweichung von der Grundstellung kommen geringe Intensitätsanteile in den beiden anderen Armen hinzu, während der Anteil in den ursprünglichen Armen in erster Ordnung unverändert bleibt. Dies hat zur Folge, dass auch für kleine Winkelauslenkungen der Wellenplatten zueinander, insbesondere für Winkel kleiner als 10° bzw. kleiner als 1°, die wellenlängenabhängigen Verluste geringer sind als ohne die kompensierende Wellenplatte. Die Wahl der Ordnung n' und die Achsenorientierung der kompensierenden Wellenplatte erlauben ferner, die Breitbandigkeit der Transmission und/oder der angestrebten Resonanzlinienverstimmung einzustellen. Insgesamt bewirkt die Kompensation, dass eine hohe Bandbreite erhalten bleibt, auch wenn die Ordnung der einzelnen Wellenplatten vergleichsweise groß gewählt wird, z.B. n=n'=5. Insbesondere lässt sich so eine hohe Stellempfindlichkeit der Träger-Einhüllenden-Offsetfrequenz $f_0$ erreichen, ohne dabei gleichzeitig die spektrale optische Bandbreite des Interferometers und damit die spektrale Breite des vom Resonator erzeugten bzw. aufgenommenen Frequenzkamms wesentlich zu beeinflussen.

Die Kompensation ist außerdem sinnvoll, wenn die Frequenz $f_Z$, für welche das Interferometer resonant eingestellt ist, außerhalb des Frequenzbereiches der umlaufenden Strahlung liegt. Für eine Zielfrequenz $f_Z$ in der Nähe der Trägerfrequenz $f_C$ ergibt sich wie in der Anordnung ohne kompensierende Wellenplatte eine Fixpunktfrequenz $f_{fix} \approx f_Z$. Wird die Zielfrequenz $f_Z$ deutlich unterschiedlich von $f_C$ gewählt, so ergibt sich im kompensierten Aufbau die Tendenz, dass der Fixpunkt $f_{fix}$ nicht mehr mit der Zielfrequenz $f_Z$ zusammenfällt. In der hier beschriebenen bevorzugten Variante verschiebt sich $f_{fix}$ gegenüber $f_Z$ von $f_C$ weg. Dies bedeutet, dass die Zielfrequenz $f_Z$, für welche das Interferometer resonant eingestellt ist, näher an $f_C$ gewählt werden kann als eine angestrebte Fixpunktfrequenz $f_{fix}$. Dabei wird die Zielfrequenz $f_Z$ sinnvollerweise nahe genug an der Trägerfrequenz $f_C$ gewählt, dass die Transmissionsverluste mit der gewünschten Anwendung kompatibel sind. So wird durch geeignete Wahl der Zielfrequenz $f_Z$ ein großer Bereich für die Fixpunktfrequenz $f_{fix}$ einstellbar.

In offensichtlicher Weise lässt sich die in Figur 8 dargestellte Anordnung abwandeln, beispielsweise dadurch, dass die Kompensation der Doppelbrechung des Elementes (35) nicht nur durch ein weiteres doppelbrechendes Element 34 erreicht wird, sondern durch mehrere doppelbrechende Elemente, beispielsweise durch zwei doppelbrechende Elemente in symmetrischer Anordnung vor und hinter dem Element 35. Das nur in dieser abgewandelten, symmetrischen Version vorhandene, zusätzliche doppelbrechende Element 34' ist in Fig. 8 gestrichelt dargestellt. Ferner kann nicht nur die Orientierung der Wellenplatte 34 oder die an der Wellenplatte 34 vorhandene Polarisation der umlaufenden Strahlung einstellbar sein, sondern ebenso die Orientierung der weiteren doppelbrechenden Elemente bzw. die jeweils dort vorhandene Polarisation der umlaufenden Strahlung.

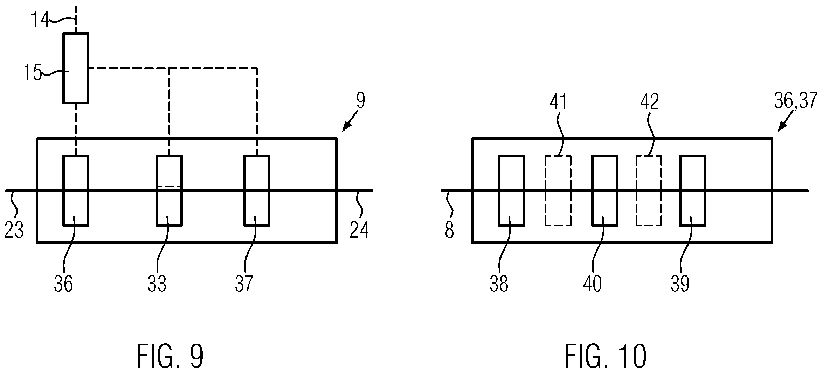

Figur 9 zeigt eine alternative bzw. erweiterte Ausführung einer rotierbaren Wellenplatte (z.B. 33, 35) des Interferometers 9 in Figuren 7 und 8. Diese Wellenplatte 33 kann nun entweder eine fixe Orientierung haben, beispielsweise bei 45°, oder aber wie zuvor eine variable Orientierung. Die Anordnung verfügt über einen ersten und einen zweiten Polarisationssteller 36, 37, welche um das doppelbrechende Element 33 angeordnet sind. Die beiden Polarisationssteller 36, 37 und/oder die Wellenplatte 33 sind vom Stellglied 15 ansteuerbar und damit variabel einstellbar. Die Polarisationssteller 36, 37 können dabei insbesondere verstellt, beispielsweise rotiert werden, um die an der Wellenplatte 33 eintreffende Polarisation der Strahlung 8 zu ändern. Der Polarisationssteller 36, 37 kann zu diesem Zweck beispielsweise als justierbare Halbwellenplatte, als Kombination von Wellenplatten und elektrooptischem Modulator, Faraday-Rotator, Flüssigkristall-Element oder mit ferroelektrischen Kristallen realisiert werden. In Figur 9 wird wieder angedeutet, dass die beiden Interferometerarme 9a, 9b sich zwischen den beiden Oberflächen des doppelbrechenden Elements 33 befinden und geometrisch übereinander liegen. Erneut ist der Versatz zwischen den beiden Interferometerarmen 9a, 9b in Figur 9 nur der Übersichtlichkeit halber eingefügt worden. Je nach angestrebtem Hub kann einer der beiden Polarisationsteller weggelassen bzw. durch einen Polarisator ersetzt werden.

Figur 10 zeigt, wie jeder der Polarisationssteller 36, 37 im Detail aufgebaut sein kann. Konkret weist jeder Polarisationssteller 36, 37 dabei eine erste $\lambda/4$-Platte 38 und eine zweite $\lambda/4$-Platte 39 auf, wobei $\lambda$ vorzugsweise die Wellenlänge $\lambda_C$ der umlaufenden Strahlung ist. Zwischen den beiden $\lambda/4$-Platten 38, 39 befindet sich ein variabel einstellbarer Phasenschieber 40, beispielsweise ein einstellbares doppelbrechendes Element, wie ein elektrooptischer Modulator (EOM), ein ansteuerbarer Flüssigkristall, ein ferroelektrischer Kristall und/oder ein thermisch oder durch Druck oder Dehnung einstellbares doppelbrechendes Element. Denkbar wäre es, die Doppelbrechung gleichzeitig thermisch und elektrisch zu beeinflussen. Insbesondere können zwei oder mehrere Kristalle verwendet werden, idealerweise mit um 90° gegeneinander gedrehten Achsen, um die Doppelbrechung einzustellen. In diesem Fall kann die thermische Einstellung auch über eine Temperaturdifferenz zwischen den beiden oder mehreren Kristallen erfolgen.

Je nach Art des verwendeten Phasenschiebers 40 können hier zusätzliche globale Phasen- und Gruppenverzögerungen auftreten, die sich dem restlichen Effekt überlagern. Sie können zu einer gezielten Einstellung des Frequenzfixpunktes $f_{fix}$ genutzt werden. Beispielsweise kann bei einem elektrooptischen Kristall die Stärke der spannungsabhängigen globalen Phasen- bzw. Gruppenverzögerung durch die Ausrichtung der Kristallachsen und der elektrischen Felder zum optischen Strahl beeinflusst werden. Es kann vorteilhaft sein, für die Polarisationssteller 36, 37 ein gemeinsames Element zu verwenden, beispielsweise durch Faltung und / oder Spiegelung des optischen Weges.

Mit gestrichelten Linien ist dargestellt, dass optional zwischen der ersten $\lambda/4$-Platte 38 und dem Phasenschieber 40 und/oder zwischen der zweiten $\lambda/4$-Platte 39 und dem Phasenschieber 40 eine $\lambda/2$-Platte 41, 42 für eine bestimmte Zielwellenlänge, vorzugsweise $\lambda_C$, eingefügt ist. Durch Drehen dieser $\lambda/2$-Platte 41, 42 wird die Orientierung der Doppelbrechung an einem Punkt verändert, an dem die Strahlung zirkular polarisiert ist. Dadurch kann nun die Phase der Strahlung 8 verändert werden, ohne gleichzeitig eine Gruppenverzögerung $\Delta\varphi_g$ hervorzurufen.

Es ist eine Besonderheit der Erfindung, dass es möglich ist, die Gruppenverzögerung mit einer Art optischem Hebeleffekt hervorzurufen, welche sich beispielsweise beim Einsatz von elektrooptischen Modulatoren vorteilhaft ausnutzen lässt. Um in einem Resonator 2 die Umlaufzeit um eine optische Periode $T_C = 1/f_C$ zu verändern, muss der optische Weg im Resonator 2 um eine Wellenlänge verändert werden. Diese Änderung entspricht im Freistrahlbereich einer Phasenänderung von $2\pi$, die beispielsweise mit Hilfe eines beweglichen Spiegels oder mit Hilfe eines elektrooptischen Phasenmodulators hervorgerufen werden kann, bei welchem typischerweise die Gruppenverzögerung in etwa gleich der Phasenverzögerung ist. Gemäß der Erfindung wird anstelle der direkten Pfadänderung die optische Weglänge durch das Überblenden zwischen zwei Pfaden eines Interferometers 9 verwendet. Beispielsweise kann das Überblenden durch Einstellung des Polarisationswinkels $\theta$ vor einem Polarisationsstrahlteiler oder vor einem doppelbrechenden Element geschehen. Bei einem Pfadunterschied der Interferometerarme 9a, 9b von $|L_g1 - L_g2|$ $= n*\lambda$ ist die Änderung der optischen Weglänge $\Delta L_g =$ $n*\lambda/2*\cos(2\theta) = n*\lambda/2*\sin(2(\theta-45°))$. Die Weglängenänderung $\Delta L_g$ ist gleichbedeutend mit einer differentiellen Gruppenverzögerung der Pulse 110 von $\Delta\varphi_g = 2\pi/\lambda*L_g$. Wird zur Drehung der Polarisation gemäß Figur 10 die Änderung einer Phasenverschiebung $\Delta\varphi$ zwischen zwei Polarisationsrichtungen verwendet, erhält man eine Polarisationsrotation von $A\theta = \Delta\varphi/2$, was eine Änderung der optischen Weglänge von $\Delta L_g = n*\lambda/2*\sin(\Delta\varphi)$ bewirkt und für kleine $\Delta\varphi$ zu einer linearen Abhängigkeit $\Delta L_g =$ $n*\lambda*\Delta\varphi/2$ wird. Im Vergleich zur direkten Veränderung der Pfadlänge mit $\Delta L_g = \lambda*\Delta\varphi/(2\pi)$ besteht hier eine Wirkungsvergrößerung von $n*\pi$. Dieser Vorteil bleibt auch bestehen, wenn die Anordnung als Stellelement für die Träger-Einhüllenden-Frequenz verwendet wird.

Besonders interessant sind Realisierungen des Interferometers 9, bei welchen eine Veränderung der Gruppenumlaufzeit ohne eine gleichzeitige, zumindest ohne wesentliche Beeinflussung der Transmission des Interferometers 9 erreicht wird. Bei allen vorstehend geschilderten Ausführungsbeispielen erfolgt bei einer Veränderung des Aufteilungsverhältnisses und damit der mittleren Gruppenverzögerung der Pulse 110 keine oder keine wesentliche Beeinflussung der Transmission der Trägerfrequenz $f_C$. Je nach Anpassung der Bandbreite des Interferometers kann auch die Änderung der Transmission auf das gesamte umlaufende Licht gering bzw. vernachlässigbar gehalten werden.

Es sind allerdings auch weitere Anordnungen denkbar, in welchen die Transmission des Interferometers nicht konstant ist. Eine solche Situation tritt insbesondere auf, wenn der Pfadunterschied zwischen den Interferometerarmen kein ganzzahliges Vielfaches einer Trägerwelle $\lambda_C$ ist. Beispielsweise lässt sich mit einem Pfadunterschied von $(n+1/2)*\lambda_C$ und einem anschließenden Polarisator eine immer noch vorteilhafte Konfiguration erreichen, in welcher die Transmission für die Trägerfrequenz $f_C$ in einer geeigneten Grundstellung etwa 1 ist und nur quadratisch mit der Abweichung von der Grundstellung variiert, während sich die Gruppenlaufzeit linear mit dieser Abweichung verändert.

Die erfindungsgemäße Resonatoranordnung 1 kann nicht nur mit Freistrahlresonatoren eingesetzt werden, beispielsweise in Festkörperlasern oder Lasern anderer Art, sondern ebenso auch in Faserlasern. Denkbar ist es, die Resonatoranordnung 1 oder zumindest das Interferometer 9 mikroskopisch mit Hilfe von Waveguides zu implementieren.

Die Erfindung eignet sich beispielsweise für die Überhöhung oder das Filtern von optischer Strahlung sowie für die Erzeugung von Frequenzkämmen beziehungsweise ultrakurzen Pulsen, insbesondere mit einer variablen Einstellbarkeit und/oder Stabilisierung auf eine bestimmte Mode $f_C$, eine vorgegebene Repetitionsrate $f_{rep}$ oder eine vorgegebene Offsetfrequenz $f_0$.

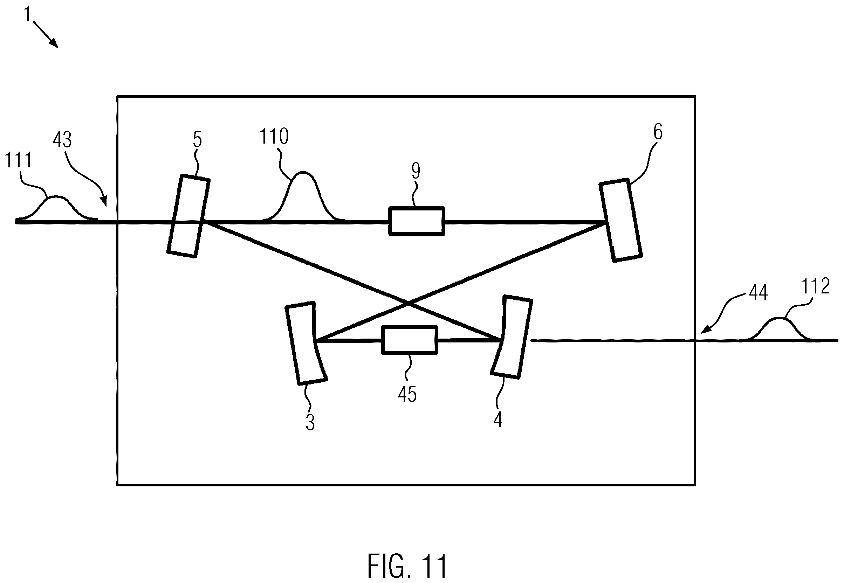

Figur 11 zeigt ein Ausführungsbeispiel, in welchem der erfindungsgemäße Resonator 2 als Filter- und / oder als Überhöhungsresonator verwendet wird. Der Resonator, der in diesem Beispiel als Ringresonator mit 4 Spiegeln 3,4,5,6 ausgeführt ist, empfängt an einem Eingang 43 eine optische Strahlung 111, welche vorzugsweise zwei oder mehr unterschiedliche spektrale Anteile aufweist. Innerhalb des Resonators 2 befindet sich das Interferometer 9, so dass die Lage der Resonanzen (Moden) des Resonators mit Hilfe des Interferometers 9 eingestellt werden kann. Durch den Resonator 2 werden Teile oder die Gesamtheit der einfallenden Strahlung 111 überhöht und laufen so als modifizierte Strahlung 110 innerhalb des Resonators 2 der Resonatoranordnung 1 um. Optional befindet sich im Resonator 2 ein nichtlineares optisches Element 45, welches die resonatorinterne Strahlung 110 weiter modifiziert, sie insbesondere durch Summen- und/oder Differenzfrequenzmischung in seiner Frequenz verändert. Das nichtlineare optische Element 45 kann alternativ zur Summen- und Differenzfrequenzmischung auch geeignet konfiguriert oder ausgewählt sein zum Erzeugen oder Verstärken von Licht mittels eines optischparametrischen Prozesses oder zum Erzeugen von Strahlung bei der zweiten Harmonischen (SHG) oder bei höheren Harmonischen der Grundwelle bzw. der Trägerwelle 120. Durch die Erzeugung höherer Harmonischer kann beispielsweise UV-Licht oder EUV-Licht erzeugt werden. Das nichtlineare optische Element 45 kann zu diesem Zweck beispielsweise ein Gasjet oder ein nichtlinearer optischer Kristall sein. Die ggf. modifizierte resonatorinterne Strahlung wird an einem Ausgang 44 aus dem Resonator 2 ausgekoppelt (als ausgekoppelte Strahlung 112). Die geometrische Ausführung des Resonators 2 ist beispielhaft. Ebenso kann beispielsweise ein linearer Resonator 2 verwendet werden oder es können Ein- und Ausgang 43, 44 zusammenfallen.

Ausgehend von den dargestellten Ausführungsbeispielen kann die erfindungsgemäße Resonatoranordnung 1 zu diesem Zweck in vielfacher Hinsicht abgewandelt werden. Denkbar ist es insbesondere, dass im Interferometer 9 nicht nur ein erster und ein zweiter Interferometerarm 9a, 9b vorgesehen werden, sondern mehr als zwei Arme, wobei das Aufteilungsverhältnis entweder auf zwei oder auf mehrere der vielen Interferometerarme variabel einstellbar ist. Beispielsweise kann dies realisiert werden, wenn in einem oder beiden der Interferometerarme 9a, 9b im Interferometer 9 gemäß Figur 4 seinerseits ein weiteres Interferometer eingebaut wird, das in seinem Aufbau wiederum dem Aufbau gemäß Figur 4 entspricht und z.B. in einer der in den Figuren 6 bis 10 gezeigten Varianten realisiert werden kann. Figur 9 selbst ist ein Beispiel für ein solches verschachteltes Interferometer 9. Wie bereits oben beschrieben, müssen nicht alle Wellenplatten um die gleiche Wellenlänge (z.B. $\lambda_C$) zentriert sein, wodurch sich eine Beeinflussung des Fixpunktes erreichen lässt. Überdies ist es offensichtlich, dass eine Reflexion oder Umlenkung des optischen Pfades einen optimierten und Elemente sparenden Aufbau ermöglicht. Es sei nochmals erwähnt, dass anstelle der Doppelbrechung jeder andere Effekt treten kann, welcher eine polarisationsabhängige Laufzeit- bzw. Phasenverschiebung bewirkt.

Bei der Verwendung in Frequenzkammapplikationen ersetzt der erfindungsgemäße Resonator die herkömmliche Laserquelle. Entsprechend kann die erzeugte Strahlung mittels nichtlinearer Schritte, insbesondere durch spektrale Verbreiterung, Frequenzverdopplung bzw -vervielfachung, Differenzfrequenzerzeugung, Summenfrequenzerzeugung oder Ramanverschiebung, in ihren Eigenschaften verändert werden.

**Patentansprüche**

1. Optische Resonatoranordnung (1) mit einem Resonator (2), der dazu konfiguriert ist, gepulste (110), umlaufende Strahlung (8), der ein Frequenzkamm mit einer Repetitionsrate ($f_{rep}$) und einer Träger-Einhüllenden-Offsetfrequenz ($f_0$) zugeordnet ist, zu erzeugen oder aufzunehmen, wobei innerhalb des Resonators (2) ein Interferometer (9) mit mindestens einem ersten und einem zweiten Interferometerarm (9a, 9b) angeordnet ist,
wobei der erste Interferometerarm (9a) eine erste optische Weglänge (L1) aufweist und der zweite Interferometerarm (9b) eine sich von der ersten optischen Weglänge (L1) unterscheidende, zweite optische Weglänge (L2), wobei die Resonatoranordnung ein Stellglied (15) aufweist, das dazu konfiguriert ist, ein Aufteilungsverhältnis, mit dem das Interferometer (9) die im Resonator (2) umlaufende Strahlung (8) auf den ersten und zweiten Interferometerarm (9a, 9b) aufteilt, variabel einzustellen wobei
die Resonatoranordnung (1) dazu konfiguriert ist, durch das Ändern des Aufteilungsverhältnisses der im Resonator (2) umlaufenden Strahlung (8) auf den ersten und zweiten Interferometerarm (9a, 9b) die Repetitionsrate und die Träger-Einhüllenden-Offsetfrequenz ($f_0$) des Frequenzkamms ($f_m$) so zu verändern, dass sich der Frequenzkamm ($f_m$) der Laserpulse (110) im Frequenzraum ziehharmonikaartig um einen Fixpunkt ($f_{fix}$ streckt oder staucht.

2. Resonatoranordnung nach Anspruch 1, **dadurch gekennzeichnet, dass** das genannte Stellglied (15) eine Regelbandbreite von mindestens 10 kHz, mindestens 100 kHz oder mindestens 1000 kHz hat, wobei vorzugsweise die Resonatoranordnung (1) eine Messvorrichtung (11) aufweist, welche dazu konfiguriert ist, die vom Stellglied (15) erreichte Verschiebung der Resonanzlinien zu messen, insbesondere einer Repetitionsrate ($f_{rep}$) des Resonators (2) und/oder einer Träger-Einhüllenden-Offsetfrequenz ($f_0$) eines vom Resonator (2) erzeugten bzw. aufgenommenen Frequenzkamms.

3. Resonatoranordnung nach einem der vorangehenden Ansprüche, **dadurch gekennzeichnet, dass** das Interferometer (9) wenigstens ein optisches Element (33,34,35) enthält, das eine polarisationsabhängige Laufzeit- und/oder Phasenverschiebung aufweist, oder durch ein solches Element (33,34,35) realisiert ist, insbesondere ein doppelbrechendes optisches Element, wobei vorzugsweise das wenigstens eine optische Element (33, 34, 35) eine Phasenverschiebung von einem ganzzahligen oder halbzahligen Vielfachen von 2Pi bewirkt, insbesondere eine ganzzahlige bzw. halbzahlige Wellenplatte (33, 34, 35) für eine Zielwellenlänge ($\lambda_Z$) ist.

4. Resonatoranordnung nach einem der vorangehenden Ansprüche, **dadurch gekennzeichnet, dass** das Interferometer (9) eines oder mehrere der folgenden optischen Elemente aufweist: einen Polarisationsfilter (36, 37), einen Polarisationssteller, eine $\lambda$-Platte, eine n$\lambda$-Platte mit n$\geq$2, eine $\lambda$/2-Platte, eine $\lambda$/4-Platte, einen Elektro-Optischen Modulator (40), einen variabel einstellbaren Flüssigkristall (40).

5. Resonatoranordnung nach einem der Ansprüche 3 oder 4, **dadurch gekennzeichnet, dass** mindestens zwei optische Elemente mit polarisationsabhängiger Phasenverschiebung (34, 35) im Resonator (2) vorhanden sind, und dass das Aufteilungsverhältnis der im Resonator (2) umlaufenden Strahlung (8) auf den ersten und zweiten Interferometerarm (9a, 9b) einstellbar ist durch das Einstellen einer Orientierung der beiden optischen Elemente (34, 35) relativ zueinander und/oder durch eine unterschiedliche Beeinflussung der Polarisation der die beiden optischen Elementen (34, 35) durchlaufenden Strahlung.

6. Resonatoranordnung nach einem der vorangehenden Ansprüche, **dadurch gekennzeichnet, dass** im Resonator (2) ein Lasermedium (7) oder ein Verstärkermedium (7) und/oder ein Modenkoppelelement (M, 17) für die im Resonator (2) umlaufende Strahlung (8) angeordnet ist, wobei das Lasermedium bzw. das Verstärkermedium gepumpt werden kann.

7. Resonatoranordnung nach einem der vorangehenden Ansprüche, **dadurch gekennzeichnet, dass** die Transmission des Resonators (2) für die darin umlaufende Strahlung (8) bei einer Änderung des Aufteilungsverhältnisses der Strahlung (8) auf den ersten und zweiten Interferometerarm (9a, 9b) konstant bzw. im Wesentlichen konstant bleibt.

8. Resonatoranordnung nach einem der vorangehenden Ansprüche, **dadurch gekennzeichnet, dass** der Modenabstand des Resonators ein ganzzahliges Vielfaches des Modenabstandes einer in den Resonator einfallenden Strahlung ist oder dass die Modenabstände von Resonator und einfallender Strahlung in einem rationalen Verhältnis zueinander stehen.

9. Resonatoranordnung gemäß einem der vorangehenden Ansprüche, wobei die Resonatoranordnung (1) konfiguriert ist zum Filtern und/oder Überhöhen optischer Strahlung (111), wobei innerhalb des Resonators (2) der Resonatoranordnung (1) ein nichtlineares optisches Element (45) angeordnet ist, insbesondere ein Gasjet oder ein Kristall, und wobei das nichtlineare optische Element (45) seinerseits ausgewählt ist zum Erzeugen der zweiten oder einer höheren Harmonischen der im Resonator umlaufenden Strahlung (110), zur Erzeugung von Strahlung mittels Summen- oder Differenzfrequenzerzeugung oder zur Erzeugung oder Verstärkung von Strahlung mittels eines optischparametrischen Prozesses.

10. Faserlaser (1), Frequenzkammgenerator (1), aktiv oder passiv modengekoppelter Laser (1) mit einem Modenkoppelelement (M, 17) oder injektionsstabilisierter Laser (1) jeweils umfassend eine optische Resonatoranordnung (1) gemäß einem der vorangehenden Ansprüche.

11. Verfahren zum Einstellen einer Repetitionsrate ($f_{rep}$) und einer Träger-Einhüllenden-Offsetfrequenz ($f_0$) von in einem Resonator (2) umlaufender Strahlung (8), die aus Laserpulsen (110) besteht, und der ein vom Resonator erzeugter beziehungsweise aufgenommener Frequenzkamm ($f_m$) mit der Repetitionsrate ($f_{rep}$) und der Träger-Einhüllenden-Offset-Frequenz ($f_0$) zugeordnet ist, wobei ein innerhalb des Resonators (2) angeordnetes Interferometer (9) die im Resonator (2) umlaufenden Laserpulse (110) in einen ersten Pulsanteil (8a) aufteilt, der einen ersten Interferometerarm (9a) mit einer ersten optische Weglänge (L1) durchläuft, und in mindestens einen zweiten Pulsanteil (8b), der einen zweiten Interferometerarm (9b) mit einer zweiten optische Weglänge (L2) durchläuft, wobei die ersten und zweiten Pulsanteile (8a, 8b) nach Durchlaufen des Interferometers (9) miteinander zur Interferenz gebracht werden, und wobei das Verfahren das Verändern des Aufteilungsverhältnisses umfasst, mit dem das Interferometer (9) die im Resonator (2) umlaufenden Pulse (110) in den ersten und den zweiten Pulsanteil (8a, 8b) aufteilt, wobei das Ändern des Aufteilungsverhältnisses der im Resonator (2) umlaufenden Strahlung (8) auf den ersten und zweiten Interferometerarm (9a, 9b) die Repetitionsrate und die Träger-Einhüllenden-Offsetfrequenz ($f_0$) derart verändert, dass sich im Frequenzraum der Frequenzkamm ($f_m$) der Laserpulse (110) ziehharmonikaartig um einen Fixpunkt ($f_{fix}$) streckt oder staucht.

12. Verfahren nach Anspruch 11, **dadurch gekennzeichnet, dass** beim Verändern des Aufteilungsverhältnisses die Gruppenumlaufzeit ($\tau$) der im Resonator (2) umlaufenden Pulse (110) verändert wird, ohne dass sich eine Phasenumlaufzeit einer Trägerwelle (120) im Resonator (2) ändert.

13. Verfahren nach einem der Ansprüche 11 oder 12, **dadurch gekennzeichnet, dass** Umlaufverluste der im Resonator (2) umlaufenden Pulse (110) beim Verändern des Aufteilungsverhältnisses, mit dem das Interferometer (9) die im Resonator (2) umlaufenden Pulse (110), insbesondere die Trägerwelle (120) in den ersten und den zweiten Pulsanteil (8a, 8b) aufteilt, nicht oder nicht wesentlich geändert werden.

14. Verfahren nach einem der Ansprüche 11 bis 13, **dadurch gekennzeichnet, dass** das Interferometer (9) mindestens ein optisches Element mit polarisationsabhängiger Phasenverschiebung, insbesondere ein doppelbrechndes Element, enthält, und dass das Aufteilungsverhältniss, mit dem das Interferometer (9) die im Resonator (2) umlaufenden Pulse (110) in den ersten und den zweiten Pulsanteil (8a, 8b) aufteilt, durch Drehen des optischen Elementes um eine optische Achse des Resonators (2) bzw. durch Verändern der Polarisation an diesem optischen Element verändert wird, wobei vorzugsweise das optische Element eine polarisationsabhängige Phasenverschiebung von $m \cdot 0,5 \cdot \pi$ für eine vorgegebene Zielwellenlänge ($\lambda_Z$) hervorruft, wobei m eine ganze Zahl ist, insbesondere eine gerade Zahl.

15. Verfahren nach einem der Ansprüche 11 bis 14, **dadurch gekennzeichnet, dass** das Verändern des Aufteilungsverhältnisses, mit dem die im Resonator (2) umlaufenden Pulse (110) in den ersten und den zweiten Pulsanteil (8a, 8b) aufgeteilt werden, erzielt wird durch das Verändern einer polarisationsabhängigen Phase und/oder eines Polarisationswinkels der Pulse (110) am Interferometereingang (9), wobei vorzugsweise die Phase um einen Winkel ($\Delta\varphi$) oder die Polarisation um einen Winkel ($\Delta\theta$) verändert wird und die durch die Änderung der Gruppengeschwindigkeit der Pulse (110) im Resonator (2) hervorge-

rufene Gruppenverzögerung ($\Delta\varphi_g$) beträgt, wobei ein Konversionsfaktor $\Delta\varphi_g/\Delta\varphi$ bzw. $\Delta\varphi_g/(2\,\Delta\theta)$ größer ist als 1, vorzugsweise größer oder gleich $\pi$, oder größer oder gleich einem ganzzahligen Vielfachen von $\pi$.

## Claims

1. An optical resonator arrangement (1) comprising a resonator (2), which is configured to generate or receive pulsed (110), circulating radiation (8) to which a frequency comb having a repetition rate ($f_{rep}$) and a carrier-envelope-offset frequency ($f_0$) is associated,

   wherein an interferometer (9) having at least a first and a second interferometer leg (9a, 9b) is arranged within the resonator (2),
   wherein the first interferometer leg (9a) has a first optical path length (L1) and the second interferometer leg (9B) has a second optical path length (L2) other than the first optical path length (L1),
   wherein the resonator arrangement comprises an actuator (15) which is configured to variably adjust a splitting ratio, with which the interferometer (9) splits the radiation (8) circulating in the resonator (2) into the first and second interferometer legs (9a, 9b),
   wherein the resonator arrangement (1) is configured to change, by changing the splitting ratio of the radiation (8) circulating in the resonator (2) into the first and second interferometer legs (9a, 9b), the repetition rate and the carrier-envelope-offset frequency ($f_0$) of the frequency comb ($f_m$) such that the frequency comb ($f_m$) of the laser pulses (110) is stretched or compressed in frequency space in an accordion-like manner about a fixed point ($f_{fix}$).

2. The resonator arrangement according to claim 1, **characterized in that** the said actuator (15) has a control bandwidth of at least 10 kHz, at least 100 kHz or at least 1000 kHz, wherein preferably the resonator arrangement (1) comprises a measurement apparatus (11) configured to measure a shift of the resonant lines obtained by the actuator (15), in particular to measure at least one of a repetition rate ($f_{rep}$) of the resonator (2), a carrier envelope offset frequency ($f_0$) of a frequency comb generated or received by the resonator (2).

3. The resonator arrangement according to any of the preceding claims, **characterized in that** the interferometer (9) comprises at least one optical element (33, 34, 35) having at least one of a polarization dependent propagation time shift and/or phase shift, or is realized by such an element (33, 34, 35), in particular by a birefringent optical element, wherein preferably the at least one optical element (33, 34, 35) causes a phase shift of an integer or half-integral multiple of $2\pi$, in particular an integer or half-integral wave plate (33, 34, 35) for a target wavelength ($\lambda_Z$).

4. The resonator arrangement according to any of the preceding claims, **characterized in that** the interferometer (9) includes one or more of the following optical elements: a polarization filter (36, 37), a polarization adjuster, a $\lambda$ plate, a n$\lambda$ plate with n n$\geq$2, a $\lambda/2$ plate, a $\lambda/4$ plate, an electro-optical modulator (40), a variably adjustable liquid crystal (40).

5. The resonator arrangement according to any one of claims 3 or 4, **characterized in that** at least two optical elements with polarization dependent phase shift (34, 35) are present in the resonator (2), and wherein the splitting ratio of the radiation (8) circulating in the resonator (2) for the first and second interferometer legs (9a, 9b) is adjustable by adjusting an orientation of the two optical elements (34, 35) relative to each other and/or by differently influencing the polarization of the radiation passing through the two optical elements (34, 35).

6. The resonator arrangement according to any one of the preceding claims, **characterized in that** in the resonator (2) is arranged a laser medium (7) or an amplifier medium (7) and/or a mode coupling element (M, 17) for the radiation (8) circulating in the resonator (2), wherein the laser medium and the amplifier medium, respectively, are configured to be pumped.

7. The resonator arrangement according to any one of the preceding claims, **characterized in that** the transmission of the resonator (2) for the radiation (8) circulating therein remains constant or substantially constant upon a variation of the splitting ratio of the radiation (8) for the first and second interferometer legs (9a, 9b).

8. The resonator arrangement according to any one of the preceding claims, **characterized in that** the mode spacing of the resonator is an integer multiple of the mode spacing of radiation incident in the resonator, or the mode spacings of the resonator and incident radiation are related to each other by a rational ratio.

9. The resonator arrangement according to any one of the preceding claims, **characterized in that** the resonator arrangement (1) is configured to filter and/or amplify optical radiation (111), wherein a nonlinear optical element (45) is arranged within the resonator (2) of the resonator arrangement (1), in particular a gas jet or a crystal, and wherein the nonlinear optical element (45) is selected to generate the second or higher harmonic of the radiation (110) circulating in the resonator, to generate radiation by means of sum frequency generation or difference frequency generation or to generate or amplify radiation by means of optical-parametric processes.

**10.** A fiber laser (1), a frequency comb generator (1), an active or passive mode coupled laser (1) having a mode coupling element (M, 17), or an injection stabilized laser (1) each comprising an optical resonator arrangement (1) according to any one of the preceding claims.

**11.** A method for adjusting a repetition rate ($f_{rep}$) and a carrier-envelope-offset frequency ($f_0$) of radiation (8) circulating in a resonator (2), the radiation (8) consisting of laser pulses (110), and being associated with a frequency comb ($f_m$) generated or received by the resonator and having the repetition rate ($f_{rep}$) and the carrier-envelope-offset frequency ($f_0$),

the method comprising splitting, by an interferometer (9) positioned within the resonator (2), laser pulses (110) circulating in the resonator (2) into a first pulse portion (8a) that passes through a first interferometer leg (9a) having first optical path length (L1) and into a second pulse portion (8b) that passes through a second interferometer leg (9b) having a second optical path length (L2),

causing the first and second pulse portions (8a, 8b) to interfere with each other after passing through the interferometer (9),

the method further comprising varying the splitting ratio, with which the interferometer (9) splits the pulses (110) circulating in the resonator (2) into the first and second pulse portions (8a, 8b), wherein changing the splitting ratio of the radiation (8) circulating in the resonator (2) into the first and second interferometer legs (9a, 9b) changes the repetition rate and the carrier envelope offset frequency ($f_0$) such that in frequency space that frequency comb ($f_m$) of the laser pulses (110) is stretched or compressed in an accordion-like manner about a fixed point ($f_{fix}$).

**12.** The method according to claim 11, **characterized in that** upon varying the splitting ratio the group round-trip time ($\tau$) of the pulses (110) circulating in the resonator (2) is varied without changing a phase round-trip time of a carrier wave (120) in the resonator (2).

**13.** The method according to any one of claims 11 or 12, **characterized in that** round-trip losses of pulses (110) circulating in the resonator (2) are not or substantially not changed when varying the splitting ratio, with which the interferometer (9) splits the pulses (110) circulating in the resonator (2), in particular the carrier wave (120), into the first and second pulse portions (8a, 8b).

**14.** The method according to any one of claims 11 to 13, **characterized in that** the interferometer (9) comprises at least one optical element with polarization dependent phase shifting, in particular a birefringent element, and wherein the splitting ratio, with which the interferometer (9) splits the pulses (117) circulating in the resonator (2) into the first and second pulse portions (8a, 8b), is varied by rotating the optical element around an optical axis of the resonator (2) or by changing the polarization at this optical element, wherein preferably the optical element causes a polarization dependent phase shift of $m \cdot 0.5 \cdot \pi$ for a given target wavelength ($\lambda_Z$), where m is an integer, in particular an even number.

**15.** The method according to any one of claims 11 to 14, wherein the variation of the splitting ratio, with which the pulses (110) circulating in the resonator (2) are split into the first and second pulse portions (8a, 8b), is accomplished by varying a polarization dependent phase and/or a polarization angle of the pulses (110) at an inlet of the interferometer (9), wherein preferably the phase is changed by an angle $\Delta\varphi$ or the polarization is changed by an angle $\Delta\theta$, and wherein the group delay in the resonator (2) caused by a change of the group velocity of the pulses (110) is $\Delta\varphi_g$, wherein a conversion factor of $\Delta\varphi_g/\Delta\varphi$ or $\Delta\varphi_g/(2\cdot\Delta\theta)$ is greater than 1, preferably greater or equal to $\pi$, or greater or equal to an integer multiple of $\pi$.

## Revendications

**1.** Agencement de résonateur optique (1) comprenant un résonateur (2), qui est configuré pour produire ou absorber un rayonnement (8) pulsé (110) s'y propageant, auquel est associé un peigne de fréquence avec un taux de répétition ($f_{rep}$) et une fréquence d'offset ($f_0$) d'enveloppe de porteuse,

agencement dans lequel à l'intérieur du résonateur (2) est agencé un interféromètre (9) avec au moins un premier et un deuxième bras d'interféromètre (9a, 9b), et

dans lequel le premier bras d'interféromètre (9a) présente une première longueur de parcours optique (L1) et le deuxième bras d'interféromètre (9b) présente une deuxième longueur de parcours optique (L2) différente de la première longueur de parcours optique (L1), l'agencement de résonateur comprenant un organe de réglage (15), qui est configuré pour régler de manière variable, un rapport de répartition avec lequel l'interféromètre (9) répartit le rayonnement (8) se propageant dans le résonateur (2), sur le premier et le deuxième bras d'interféromètre (9a, 9b), et

l'agencement de résonateur (1) étant configuré pour, en modifiant le rapport de répartition avec lequel l'interféromètre (9) répartit le rayonnement (8) se propageant dans le résonateur (2), sur le premier et le deuxième bras d'interféromètre (9a, 9b), modifier le taux de répétition et la fréquence d'offset ($f_o$) d'enveloppe de porteuse du peigne de fréquence ($f_m$) de manière telle, que le peigne de fréquence ($f_m$) des impulsions laser (110) s'étire ou se contracte dans l'espace des fréquences, à la manière d'un accordéon autour d'un point fixe ($f_{fix}$).

2. Agencement de résonateur selon la revendication 1, **caractérisé en ce que** ledit organe de réglage (15) possède une largeur de bande de réglage d'au moins 10 kHz, d'au moins 100 kHz ou d'au moins 1000 kHz, l'agencement de résonateur (1) comprenant au moins un dispositif de mesure (11), qui est configuré pour mesurer le décalage des lignes de résonance, obtenu par l'organe de réglage (15), notamment d'un taux de répétition ($f_{rep}$) du résonateur (2) et/ou d'une fréquence d'offset ($f_o$) d'enveloppe de porteuse d'un peigne de fréquence produit ou absorbé par le résonateur (2).

3. Agencement de résonateur selon l'une des revendications précédentes, **caractérisé en ce que** l'interféromètre (9) renferme au moins un élément optique (33, 34, 35), qui présente un décalage de temps de parcours et/ou de phase fonction de la polarisation, ou est réalisé par un tel élément (33, 34, 35), notamment un élément optique biréfringent, ledit au moins un élément optique (33, 34, 35) produisant de préférence un décalage de phase correspondant à un multiple entier ou demi-entier de 2pi, notamment une lame d'onde de nombre entier ou demi-entier (33, 34, 35) pour une longueur d'onde cible ($\lambda_z$).

4. Agencement de résonateur selon l'une des revendications précédentes, **caractérisé en ce que** l'interféromètre (9) comprend un ou plusieurs des éléments optiques suivants : un filtre de polarisation (36, 37), un régulateur de polarisation, une lame-$\lambda$, une lame-n$\lambda$ avec n$\geq$2, une lame-$\lambda$/2, une lame-$\lambda$/4, un modulateur électrooptique (40), un cristal liquide (40) réglable de manière variable.

5. Agencement de résonateur selon l'une des revendications 3 ou 4, **caractérisé en ce que** dans le résonateur (2) sont prévus au moins deux éléments optiques avec un décalage de phase (34, 35) fonction de la polarisation, et **en ce que** le rapport de répartition du rayonnement (8) se propageant dans le résonateur (2), sur le premier et le deuxième bras d'interféromètre (9a, 9b), est réglable par réglage d'une orientation des deux éléments optiques (34, 35) l'un par rapport à l'autre, et/ou en exerçant une influence différente sur la polarisation du rayonnement traversant les deux éléments optiques (34, 35).

6. Agencement de résonateur selon l'une des revendications précédentes, **caractérisé en ce que** dans le résonateur (2) est prévu un milieu laser (7) ou un milieu amplificateur (7) et/ou un élément de couplage de modes (M, 17) pour le rayonnement (8) se propageant dans le résonateur (2), le milieu laser ou respectivement le milieu amplificateur pouvant être pompé.

7. Agencement de résonateur selon l'une des revendications précédentes, **caractérisé en ce que** la transmission du résonateur (2) pour le rayonnement (8) s'y propageant, reste constante ou sensiblement constante dans le cas d'une modification du rapport de répartition du rayonnement (8) sur le premier et le deuxième bras d'interféromètre (9a, 9b).

8. Agencement de résonateur selon l'une des revendications précédentes, **caractérisé en ce que** l'espacement de modes du résonateur est un multiple entier de l'espacement de modes d'un rayonnement incident dans le résonateur, ou **en ce que** les espacements de modes du résonateur et du rayonnement incident sont dans un rapport rationnel réciproque.

9. Agencement de résonateur selon l'une des revendications précédentes, **caractérisé en ce que** l'agencement de résonateur (1) est configuré pour filtrer et/ou amplifier un rayonnement optique (111), un élément optique non linéaire (45), notamment un jet de gaz ou un cristal étant agencé à l'intérieur du résonateur (2) de l'agencement de résonateur (1), et l'élément optique non linéaire (45) étant pour sa part choisi pour produire la deuxième harmonique ou une harmonique supérieure du rayonnement (110) se propageant dans le résonateur, pour la production de rayonnement moyennant la production de sommes ou de différences de fréquences, ou bien pour la production ou l'amplification de rayonnement au moyen d'un processus opto-paramétrique.

10. Laser à fibre optique (1), générateur de peigne de fréquence (1), laser à modes couplés actif ou passif (1) avec un élément de couplage de modes (M, 17), ou laser à injection stabilisée (1), comprenant respectivement un agencement de résonateur (1) selon l'une des revendications précédentes.

11. Procédé pour régler un taux de répétition ($f_{rep}$) et une fréquence d'offset ($f_o$) d'enveloppe de porteuse d'un rayonnement (8) se propageant dans un résonateur (2), qui est constitué d'impulsions laser (110) et auquel est associé un peigne de fréquence ($f_m$) produit ou respectivement absorbé par le résonateur, avec un taux de répétition ($f_{rep}$) et une fréquence d'offset ($f_o$) d'enveloppe de porteuse, procédé d'après lequel un interféromètre (9) agencé à l'intérieur du résonateur (2) répartit les impulsions laser (110) se propageant dans le résonateur (2), en une première part d'impulsions (8a), qui traversent un premier bras d'interféromètre (9a) d'une première longueur de parcours optique (L1), et en une deuxième part d'impulsions (8b), qui traversent un deuxième bras d'interféromètre (9b) d'une deuxième longueur de parcours optique (L2),

d'après lequel la première et la deuxième part d'impulsions (8a, 8b) sont amenées en interférence après avoir traversé l'interféromètre (9),

et d'après lequel il comprend l'opération consistant à modifier le rapport de répartition avec lequel l'interféromètre (9) répartit les impulsions (110) se propageant dans le résonateur (2), en la première et la deuxième part d'impulsions (8a, 8b,

et d'après lequel la modification du rapport de répartition du rayonnement (8) se propageant dans le résonateur (2), sur le premier et le deuxième bras d'interféromètre (9a, 9b), modifie le taux de répétition et la fréquence d'offset ($f_o$) d'enveloppe de porteuse de manière telle, que le peigne de fréquence ($f_m$) des impulsions laser (110) s'étire ou se contracte dans l'espace des fréquences, à la manière d'un accordéon, autour d'un point fixe ($f_{fix}$).

12. Procédé selon la revendication 11, **caractérisé en ce que** la modification du rapport de répartition entraîne une modification du temps de propagation de groupe ($\tau$) des impulsions (110) se propageant dans le résonateur (2), sans que le temps de propagation de phase d'une onde porteuse (120) dans le résonateur (2) soit modifié.

13. Procédé selon l'une des revendications 11 ou 12, **caractérisé en ce que** des pertes de propagation des impulsions (110) se propageant dans le résonateur (2), ne varient pas ou ne varient sensiblement pas lors de la modification du rapport de répartition avec lequel l'interféromètre (9) répartit les impulsions (110) se propageant dans le résonateur (2), notamment l'onde porteuse (120), en la première et la deuxième part d'impulsions (8a, 8b).

14. Procédé selon l'une des revendications 11 à 13, **caractérisé en ce que** l'interféromètre (9) renferme au moins un élément optique à décalage de phase fonction de la polarisation, notamment un élément biréfringent, et **en ce que** le rapport de répartition avec lequel l'interféromètre (9) répartit les impulsions (110) se propageant dans le résonateur (2), en la première et la deuxième part d'impulsions (8a, 8b), est modifié par rotation de l'élément optique autour d'un axe optique du résonateur (2), respectivement par modification de la polarisation au niveau de cet élément optique, l'élément optique produisant de préférence un décalage de phase de $m \cdot 0{,}5 \cdot \pi$ pour une longueur d'onde cible ($\lambda_z$) prédéterminée, m étant un nombre entier, notamment un nombre pair.

15. Procédé selon l'une des revendications 11 à 14, **caractérisé en ce que** la modification du rapport de répartition avec lequel les impulsions (110) se propageant dans le résonateur (2) sont réparties en la première et la deuxième part d'impulsions (8a, 8b), est obtenue par la modification d'une phase fonction de la polarisation et/ou d'un angle de polarisation des impulsions (110) à l'entrée d'interféromètre (9), procédé d'après lequel on modifie de préférence la phase d'un angle ($\Delta\varphi$) ou la polarisation d'un angle ($\Delta\theta$), et le retard de groupe produit par la modification de la vitesse de groupe des impulsions (110) dans le résonateur (2) valant ($\Delta\varphi_g$), un facteur de conversion $\Delta\varphi_g/\Delta\varphi$ respectivement $\Delta\varphi_g/(2\Delta\theta)$ étant supérieur à 1, de préférence supérieur ou égal à n, ou supérieur ou égal à un multiple entier de n.

FIG. 1a

FIG. 1b

FIG. 2

FIG. 3

EP 3 041 093 B1

FIG. 4

FIG. 5a

FIG. 5b

FIG. 7

FIG. 6

FIG. 8

EP 3 041 093 B1

14

15

9

23

36    33    37

24

FIG. 9

41        42        36,37

8

38    40    39

FIG. 10

FIG. 11

EP 3 041 093 B1

EP 3 041 093 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19911103 A1
- EP 1161782 B1
- DE 10044404 C2
- US 5381427 A
- US 5590148 A
- EP 2841421 A1
- WO 2015139829 A1

**In der Beschreibung aufgeführte Nicht-Patentliteratur**

- **P. M. W. FRENCH ; G. F. CHEN ; W. SIBBETT.** Tunable Group Velocity Dispersion Interferometer for Intra-Cavity and Extra-Cavity Applications. *Optics Communications,* vol. 57 (4), 263-268